(19)

Europäisches
Patentamt

European
Patent Office

Office européen
des brevets

(11) **EP 4 340 151 A1**

(12) **EUROPEAN PATENT APPLICATION**

(43) Date of publication:
**20.03.2024 Bulletin 2024/12**

(21) Application number: **22205489.2**

(22) Date of filing: **04.11.2022**

(51) International Patent Classification (IPC):
*H02J 3/00* (2006.01)       *H02J 13/00* (2006.01)

(52) Cooperative Patent Classification (CPC):
**H02J 3/0012; H02J 13/00002;** H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 IN 202241052946**

(71) Applicant: **Hitachi Energy Ltd
8050 Zürich (CH)**

(72) Inventors:
• **NAIDU, OD**
**560087 Karnataka (IN)**
• **LIKHITHA, Kukkala**
**520008 Andhra Pradesh (IN)**

(74) Representative: **Vossius & Partner
Patentanwälte Rechtsanwälte mbB
Siebertstraße 3
81675 München (DE)**

(54) **PARAMETER ESTIMATION FOR MULTI-TERMINAL LINES**

(57)    The present disclosure relates to a method for determining at least one network parameter of a network comprising a power line being terminated by at least three terminals. The method comprises: obtaining measurements of the at least three terminals, terminating the power line at respective ends of the power line, obtaining at least one input parameter for a network model of the network based on the obtained measurements of the at least three terminals, determining the at least one network parameter based on the at least one input parameter for the network model and the network model, and providing the at least one network parameter to a device being configured to control, monitor, and/or analyse the network. The present disclosure also relates to a respective device and system.

S151 — obtaining measurements of the at least three terminals, in particular the measurements measured before a fault, terminating the power line at respective ends of the power line, the power line comprising respective sections being portions of the power line starting from a location on the power line to the respective ends,
wherein electrical parameters of at least one of the respective sections are different from the electrical parameters of other respective sections

S152 — obtaining at least one input parameter for a network model of the network based on the obtained measurements of the at least three terminals, wherein the at least one input parameter for the network model is an electrical parameter of the network model, in particular an impedance of one of the respective sections of the power line

S153 — determining the at least one network parameter based on the at least one input parameter for the network model and the network model

S154 — providing the at least one network parameter to a device being configured to control, monitor, and/or analyse the network

FIG.1b)

EP 4 340 151 A1

## Description

### Technical Field

The present disclosure relates to a method, device, computer-readable medium, and system for determining at least one network parameter of a network comprising a power line being terminated by at least three terminals.

### Background

In a power system protection, fault location and control, parameters, in particular transmission line parameters, are often assumed to be known, yet it may contain errors which in turn may impact the performance of the results. Thus, the parameter estimation and validation are an area of growing importance for power systems. The transmission line parameters may be dependent on ambient system conditions including temperature, aging of the line, or the like. Thus, online estimation of line parameters is highly desirable to obtain the accurate line parameters and beneficial, especially to fault location and protection applications. In particular, the parameter estimation for lines connected with renewable resources are challenging and very important for adaptive protection applications.

A first approach may estimate the line parameters for three-terminal mixed line using positive and negative sequence, pre-fault and during fault voltages and currents, and further identifies the faulted section and fault location, however limited to cases wherein the transmission line is coupled only to a conventional source, such as a synchronous source. In scenarios where negative sequence quantities are not available, which is particularly the case in networks connected with inverter-based resources, IBRs, the first approach may require multiple pre-fault measurement sets depending on the IBR type and control, to solve for line parameters.

A second approach may estimate the line parameters for three-terminal transmission line using non-linear weighted least-square error (NWLSE) with Phasor Measurement Unit (PMU) and Supervisory Control and Data Acquisition (SCADA) measurements. This approach may require a minimum of three distinguished measurement sets to estimate the line parameters. Recording multiple sets of data requires high storage and it is a computational burden for IEDs.

A third approach may utilize analytical optimization techniques such as Newton's method and least-squares, the convergence of these methods is highly dependent on the initial guess. This approach may solve the non-linear objective functions using metaheuristic algorithm in step one and the result of step one is provided as initial guess to the Newton Raphson method in step two, to estimate line parameters for two-terminal mixed line. In metaheuristic optimization methods, there is no guarantee for global optimum solution and there is a possibility of local minima and difficult to implement in IED platforms.

Above-discussed approaches may have limitations when the transmission line is connected to IBRs and with poor initial guess. Thus, there is a need to improve a method, device, computer-readable medium, and system for determining at least one network parameter of a network comprising a power line being terminated by at least three terminals.

### Summary

It would be advantageous to achieve a parameter estimation, particularly for a network comprising at least one inverter-based resource connected to at least one terminal of a power transmission line. In doing so, it would be desirable to implement a single-step approach or a two-step approach to solve for line parameters of three-terminal homogeneous or mixed lines, by eliminating the risk of poor initial guess, with one set of measurement data (pre-fault) only.

The present disclosure relates to a method for determining at least one network parameter of a network comprising a power line being terminated by at least three terminals, the method comprising: obtaining measurements of the at least three terminals, in particular the measurements measured before a fault, terminating the power line at respective ends of the power line, the power line comprising respective sections being portions of the power line starting from a location on the power line to the respective ends, wherein electrical parameters of at least one of the respective sections are different from the electrical parameters of other respective sections; obtaining at least one input parameter for a network model of the network based on the obtained measurements of the at least three terminals, wherein the at least one input parameter for the network model is an electrical parameter of the network model, in particular an impedance of one of the respective sections of the power line; determining the at least one network parameter based on the at least one input parameter for the network model and the network model; and providing the at least one network parameter to a device being configured to control, monitor, and/or analyse the network.

It is understood by the skilled person that the measurements before a fault may refer to measurements which are performed when there is no fault, i.e., in the absence of a fault.

A network may be an electrical power transmission network.

A power line may be a cable or other structure carrying electrical energy, in particular by conducting electromagnetic waves, in an electrical power system/network. A power line may be a transmission line.

A terminal may refer to the point at which a conductor, in particular a transmission line, or network comes to an end. A terminal may refer to an electrical connector at this endpoint, acting as an interface to a further conductor and creating a point where external circuits can be connected. A terminal may be an electrical bus, in particular a bus bar and/or a bus duct, used to connect high voltage equipment.

A network parameter may be one or more line parameter(s), e.g., resistance, inductance, and/or capacitance.

An electrical parameter of a section may refer to an impedance, in particular a modelled impedance, of the section. The electrical parameter of a section may refer to a positive, negative, or zero sequence series impedance of the section, in particular the positive, negative, or zero sequence series impedance comprises a positive, negative, or zero sequence resistance of the section and/or a positive, negative, or zero sequence inductance of the section. The electrical parameter of a section may refer to a shunt admittance, in particular a modelled shunt admittance, of the section. The electrical parameter of a section may refer to a positive, negative, or zero sequence shunt admittance of the section, the positive, negative, or zero sequence shunt admittance comprises a positive, negative, or zero sequence susceptance of the section.

An electrical parameter of a section may refer to a voltage and/or a current of the section and/or a propagation constant. The electrical parameter of a section may particularly refer to a value of an electrical parameter, e.g., a voltage value and/or a current value and/or a propagation constant of the section.

The propagation constant may be denoted as $\gamma = \alpha + j\beta$ with $\alpha$ being an attenuation constant and $\beta$ being a phase constant.

An input parameter for the network model is an electrical parameter of the network model, e.g., an impedance and/or an inductance of the network model.

Terminal may be an electrical connector terminating a first electrical cable and connecting to a second electrical cable, thereby transferring electrical current from/to therebetween. A transmission line may be an overhead line or a cable, in particular an underground cable. Each section of the transmission line may be the same or different, and may be an overhead line or a cable.

A network model may be a distributed model or a series impedance model as further exemplarily described below. A line capacitance of a section may be a capacitance between a section of a transmission line and another object, in particular a conducting material, e.g. another section of the transmission line. The line capacitance of a section may be a capacitance between two phases or lines of the same section of a transmission line. The line capacitance of a section may be couple the section of a transmission line to the electrical ground potential.

Fault may refer to a fault condition in the transmission line or a section of the transmission line. A fault location is a location on the transmission line, at which the fault occurs. Fault may refer to any form of abnormality in the system, i.e., any operation condition different from the normal operation condition of the system.

According to an embodiment, the obtaining the at least one input parameter for the network model comprises or is determining the at least one input parameter for the network model based on the obtained measurements of the at least three terminals and a further network model.

According to an embodiment, the further network model is different from the network model used to determine the at least one network parameter, and wherein the network model comprises at least one more electrical parameter than the further network model, in particular a propagation constant of one of the respective sections of the power line or a line capacitance of one of the respective sections of the power line coupling the one of the respective sections to the electrical ground potential.

According to an embodiment, the at least one input parameter for the network model is determined adaptive to the difference in the electrical parameters among the respective sections of the power line modelled in the further network model.

According to an embodiment, the at least one network parameter is determined adaptive to the difference in electrical parameters among the respective sections of the power line modelled in the further network model.

According to an embodiment, the method further comprises determining a faulted section based on the at least one input parameter for the network model.

According to an embodiment, the method further comprises controlling a power device, in particular an auto recloser for the power line, based on the determined faulted section.

According to an embodiment, the method further comprises estimating the fault location, in particular when the power device operates in a first operation mode in response to the control, based on the determined faulted section, at least one electrical parameter of the network model, and voltage and current fault phasors, in particular measured during the fault.

According to an embodiment, the method further comprises providing the at least one network parameter to the device being configured to control, monitor, and/or analyse the network.

The present disclosure also relates to a device for determining at least one network parameter of a network comprising a power line being terminated by at least three terminals, the device comprising a processor being configured to: obtain measurements of the at least three terminals terminating the power line at respective ends of the power line, the power line comprising respective sections being portions of the power line starting from a location on the power line to the respective ends, wherein electrical parameters of at least one of the respective sections are different from the electrical parameters of other respective sections; obtain at least one input parameter for a network model of the network based on the obtained measurements of the at least three terminals, wherein the at least one input parameter for the network model is an electrical parameter of the network model, in particular an impedance of one of the respective sections of the power line; determine the at least one network parameter based on the at least one input parameter for the network model and the network model; and provide the at least one network parameter to a device being configured to control, monitor, and/or analyse the network.

It is understood by the skilled person that the measurements before a fault may refer to measurements which are performed when there is no fault, i.e., in the absence of a fault.

According to an embodiment, the processor is configured to obtain the at least one input parameter for the network model by determining the at least one input parameter for the network model based on the obtained measurements of the at least three terminals and a further network model.

According to an embodiment, the further network model is different from the network model used to determine the at least one network parameter.

According to an embodiment, the network model comprises at least one more electrical parameter than the further network model, in particular a propagation constant of one of the respective sections of the power line or a line capacitance of one of the respective sections of the power line coupling the one of the respective sections to the electrical ground potential.

According to an embodiment, the processor is configured to determine the at least one input parameter for the network model adaptive to the difference in the electrical parameters among the respective sections of the power line modelled in the further network model.

According to an embodiment, the processor is configured to determine the at least one network parameter adaptive to the difference in electrical parameters among the respective sections of the power line modelled in the further network model.

According to an embodiment, the processor is further configured to determine a faulted section based on the at least one input parameter for the network model

According to an embodiment, the processor is further configured to control a power device, in particular an auto recloser for the power line, based on the determined faulted section.

According to an embodiment, the processor is further configured to estimate the fault location, in particular when the power device operates in a first operation mode in response to the control, based on the determined faulted section, at least one electrical parameter of the network model, and voltage and current fault phasors, in particular measured during the fault.

According to an embodiment, the processor is further configured to provide the at least one network parameter to the device being configured to control, monitor, and/or analyse the network.

The present disclosure also relates to a computer-readable medium, for determining at least one network parameter of a network comprising a power line being terminated by at least three terminals, carrying instructions to perform the method of any one of the above-mentioned embodiments.

According to an embodiment, the device being configured to control, monitor, and/or analyse the network is or comprises the computer-readable medium according to the above-described embodiment.

The present disclosure further relates to a system comprising a network comprising a power line being terminated by at least three terminals and a device of any of the above-mentioned embodiments.

According to an embodiment, the system further comprises a power device, in particular an auto-recloser for the power line.

Various exemplary embodiments of the present disclosure are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

**Brief Description of the Drawings**

Fig. 1a) and illustrates a flowchart of a method according to an embodiment of the present disclosure. Fig. 1b) illustrates a flowchart of a method according to an embodiment of the present disclosure.

Fig. 2 illustrates a diagram of a three terminal network according to an embodiment of the present disclosure.

Fig. 3 illustrates an series impedance (R-L) model of a three terminal network according to an embodiment of the present disclosure.

Fig. 4 illustrates an distributed (R-L-C) model of a three terminal network according to an embodiment of the present disclosure.

Fig. 5 illustrates a flowchart of a method according to an embodiment of the present disclosure.

Fig. 6 illustrates a diagram of a three terminal network according to an embodiment of the present disclosure.

Fig. 7 illustrates graphical simulation results of a three terminal network according to an embodiment of the present disclosure.

Fig. 8 illustrates tables of simulation results of a three terminal network according to an embodiment of the present disclosure.

Fig. 9 illustrates percent errors of parameters computed based on a method according to an embodiment of the present disclosure.

Fig. 10 illustrates a diagram of a three terminal network according to an embodiment of the present disclosure.

Fig. 11 illustrates a diagram of a three terminal network according to an embodiment of the present disclosure.

Fig. 12 illustrates a diagram of a three terminal network according to an embodiment of the present disclosure.

Fig. 13 illustrates graphical simulation results of a three terminal network according to an embodiment of the present disclosure.

Fig. 14 illustrates a table of simulation results of a three terminal network according to an embodiment of the present disclosure.

Fig. 15 illustrates percent errors of parameters computed based on a method according to an embodiment of the present disclosure.

Fig. 16 illustrates a diagram of a three terminal network according to an embodiment of the present disclosure.

Fig. 17 illustrates graphical simulation results of a three terminal network according to an embodiment of the present disclosure.

Fig. 18 illustrates a table of simulation results of a three terminal network according to an embodiment of the present disclosure.

Fig. 19 illustrates a diagram of a three terminal network according to an embodiment of the present disclosure.

Fig. 20 illustrates graphical simulation results of a three terminal network according to an embodiment of the present disclosure.

Fig. 21 illustrates a table of simulation results of a three terminal network according to an embodiment of the present disclosure.

Fig. 22 illustrates a diagram of a three terminal network according to an embodiment of the present disclosure.

Fig. 23 illustrates graphical simulation results of a three terminal network according to an embodiment of the present disclosure.

Fig. 24 illustrates a table of simulation results of a three terminal network according to an embodiment of the present disclosure.

## Detailed Description of the Disclosure

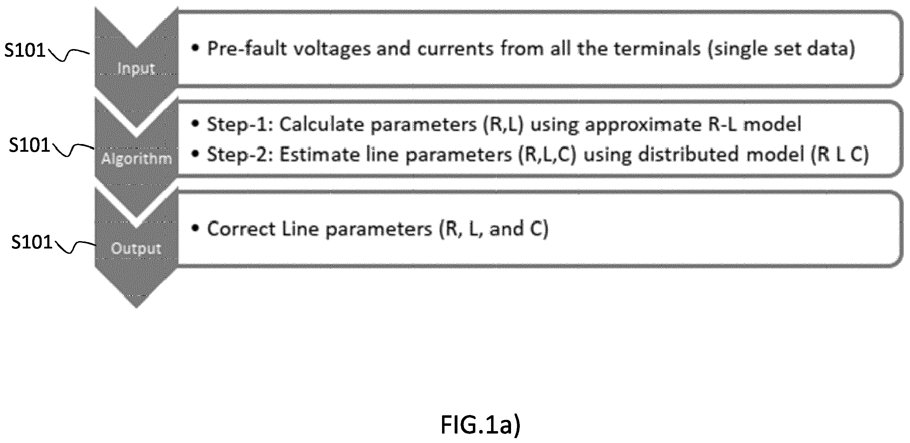

Fig. 1a) and illustrates a flowchart of a method according to an embodiment of the present disclosure. In particular the flowchart illustrates a two-step methods for a network comprising power line being terminated by at least three terminals, wherein the at least three terminals terminates the power line at respective ends of the power line, the power line comprising respective sections being portions of the power line starting from a location on the power line to the respective ends, and wherein electrical parameters of at least one of the respective sections are different, in particular in value, from the electrical parameters of other respective sections. Such network is also referred to as a network with mixed lines. A network wherein the electrical parameters of all the respective sections are equal, in particular in value, may be also referred to as a network with homogeneous lines. The power line may be a transmission line. A terminal may refer to the point at which a conductor, in particular a transmission line, or network comes to an end. A terminal may refer to an electrical connector at this endpoint, acting as an interface to a further conductor and creating a point where external circuits can be connected. A terminal may be an electrical bus, in particular a bus bar and/or a bus duct, used to connect high voltage equipment. A transmission line may be connected to a load or a source via a terminal terminating the transmission line. At S101, pre-fault voltages and currents from all the terminals, i.e., three terminals in this embodiment, are obtained, which may be available using digital fault recorder (DFR) data. This data can be recorded by the IEDs at regular intervals for analysis. It is understood by the skilled person that the power line may be further terminated by a fourth terminal coupled to a fourth power source, a fifth terminal coupled to a fifth power source, and so on. At S102, a two-step methods algorithm is performed. At step-1, series impedance of each section is calculated using a first model of the network, e.g., an R-L model. At step-2, the series impedance obtained from step-1 is given as an initial guess to the least-squares method and further line parameters are estimated using a second model of the network, e.g., a distributed parameter model. The further line parameters computed at step-2 may be the same parameters, in particular with a higher accuracy, to those calculated at step-1. At S103, the line parameters are outputted, in particular to be used further in the system including a protection, control and fault location applications.

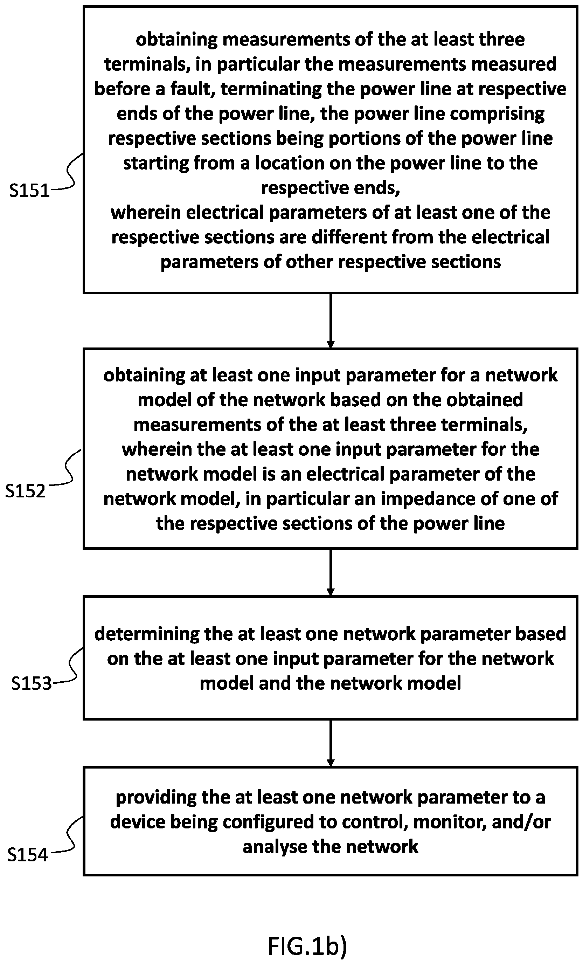

Fig. 1b) illustrates a flowchart of a method according to an embodiment of the present disclosure. At S151, measurements of the at least three terminals are obtained, in particular the measurements measured before a fault, terminating the power line at respective ends of the power line, the power line comprising respective sections being portions of the power line starting from a location on the power line to the respective ends, wherein electrical parameters of at least one of the respective sections are different from the electrical parameters of other respective sections. It is understood by the skilled person that the measurements before a fault may refer to measurements which are performed when there is no fault, i.e., in the absence of a fault. At S152, at least one input parameter is obtained for a network model of the network based on the obtained measurements of the at least three terminals, wherein the at least one input parameter for the network model is an electrical parameter of the network model, in particular an impedance of one of the respective sections of the power line. At S153, the at least one network parameter is determined based on the at least one input parameter for the network model and the network model. At S154, the at least one network parameter is provided to a device being configured to control, monitor, and/or analyse the network.

According to an embodiment, the obtaining the at least one input parameter for the network model comprises or is determining the at least one input parameter for the network model based on the obtained measurements of the at least three terminals and a further network model, wherein the further network model is different from the network model used to determine the at least one network parameter, and wherein the network model comprises at least one more electrical parameter than the further network model, in particular a propagation constant of one of the respective sections of the power line or a line capacitance of one of the respective sections of the power line coupling the one of the respective sections to the electrical ground potential.

According to an embodiment, the at least one input parameter for the network model is determined adaptive to the difference in the electrical parameters among the respective sections of the power line modelled in the further network model, and/or wherein the at least one network parameter is determined adaptive to the difference in electrical parameters among the respective sections of the power line modelled in the further network model.

According to an embodiment, the method further comprises determining a faulted section based on the at least one input parameter for the network model; and controlling a power device, in particular an auto recloser for the power line, based on the determined faulted section.

According to an embodiment, the method further comprises estimating the fault location, in particular when the power device operates in a first operation mode in response to the control, based on the determined faulted section, at least one electrical parameter of the network model, and voltage and current fault phasors, in particular measured during the fault; and providing the at least one network parameter to the device being configured to control, monitor, and/or analyse the network.

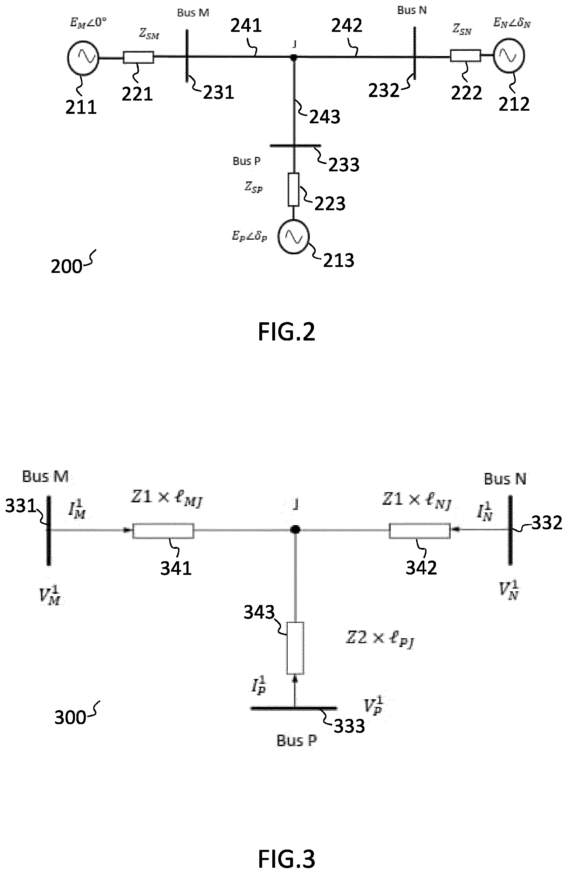

Fig. 2 illustrates a diagram of a three terminal network according to an embodiment of the present disclosure. In particular, the network 200 comprises a power line terminated by the three terminals Bus M 231, Bus N 232, and Bus P 233 at respective ends. The portions of the power line from the point J to the respective three terminals 231, 232, and 233 are referred to as a first section MJ 241, a second section NJ 242, and a third section PJ 243, respectively. Each of the three terminals 231, 232, and 233 are coupled to respective power sources 211, 212, and 213 modelled with source voltage parameters ($E_M$, $E_N$, $\delta_N$, $E_P$, $\delta_P$) and the respective source impedances $Z_{SM}$ 221, $Z_{SN}$ 222, and $Z_{SP}$ 223. The modelled parameters of the sources describe the pre-fault operating conditions.

In the following, two scenarios are considered 1) All sections, MJ 241, NJ 242 and PJ 243, have the same parameters 2) MJ 241 and NJ 242, also referred to as main sections, have the same parameters and PJ, also referred to as a tapped line, has parameters different, in particular in values, from the parameters of MJ 241 and NJ 242.

In the following, the first scenario is considered.

- Scenario 1: All sections, MJ 241, NJ 242 and PJ 243, have the same parameters.

Fig. 3 illustrates a series impedance model of a three terminal network according to an embodiment of the present disclosure. In particular, Fig. 3 illustrates a series impedance (R-L) model 300 of the network 200. According to an embodiment, the series impedance model 300 is used in step-1 of Fig. 1. According to an embodiment, the series impedance model is referred to as a network model of the network 200. According to an embodiment, step-1 of Fig. 1 is a non-iterative method for parameter estimation. The modelled network 300 comprises a power line terminated by the three terminals Bus M 331, Bus N 332, and Bus P 333 at respective ends. The parameters of the network are as follows:

$Z1 = R1 + jX1$; $Y1 = jB1$; $X1 = j\omega L1$; $B1 = j\omega C1$; $\omega = 2\pi f$;

$Z2 = R2 + jX2$; $Y2 = jB2$ ; $X2 = j\omega L2$; $B2 = j\omega C2$;

$V_M^1$ = Positive sequence voltage measured at Bus M 331

$I_M^1$ = Positive sequence current measured at Bus M 331

$V_N^1$ = Positive sequence voltage measured at Bus N 332

$I_N^1$ = Positive sequence current measured at Bus N 332

$V_P^1$ = Positive sequence voltage measured at Bus P 333

$I_P^1$ = Positive sequence current measured at Bus P 333

$Z1$, $Z2$ =Positive sequence series impedance of section MJ, NJ and of PJ in ohm/m

$Y1$, $Y2$ =Positive sequence shunt admittance of section MJ, NJ and of PJ in mho/m

$R1$, $R2$ =Positive sequence resistance of section MJ, NJ and of PJ in ohm/m

$X1$, $X2$ =Positive sequence inductance of section MJ, NJ and of PJ in ohm/m

$B1$, $B2$ =Positive sequence susceptance of section MJ, NJ and of PJ in mho/m

$\omega$ = angular speed in radians/sec

$f$ = system frequency in Hz

$L1$, $L2$ = positive sequence inductance of section MJ, NJ and of PJ in H/m

$C1$, $C2$ = positive sequence capacitance of section MJ, NJ and of PJ in F/m

$\ell_{MJ}$ =Length of section MJ in meter

$\ell_{NJ}$ =Length of section NJ in meter

$\ell_{PJ}$ =Length of section PJ in meter

Considering scenario 1, $Z2 = Z1$, since all the sections have the same parameters.

From Fig. 3, applying Kirchhoff voltage law, KVL, across M-P follows:

$$V_M^1 - I_M^1 Z1\ell_{MJ} - (I_M^1 + I_N^1)Z2\ell_{PJ} - V_P^1 = 0 \qquad (1)$$

and similarly, applying KVL across N-P follows:

$$V_N^1 - I_N^1 Z1\ell_{NJ} - (I_M^1 + I_N^1)Z2\ell_{PJ} - V_P^1 = 0 \qquad (2)$$

· From the above equations (1) and (2), $Z1$ is computed as follows:

$$Z1 = \frac{V_M^1 - V_N^1}{I_M^1 \ell_{MJ} - I_N^1 \ell_{NJ}} \qquad (3)$$

· By substituting Z1 in equation (2), Z2 is given as follows:

$$Z2 = \frac{V_M^1 - V_P^1 - I_M^1 Z1\ell_{MJ}}{(I_M^1 + I_N^1)\ell_{PJ}} \qquad (4)$$

Here $Z2 = Z1$, since all the sections have same parameters.

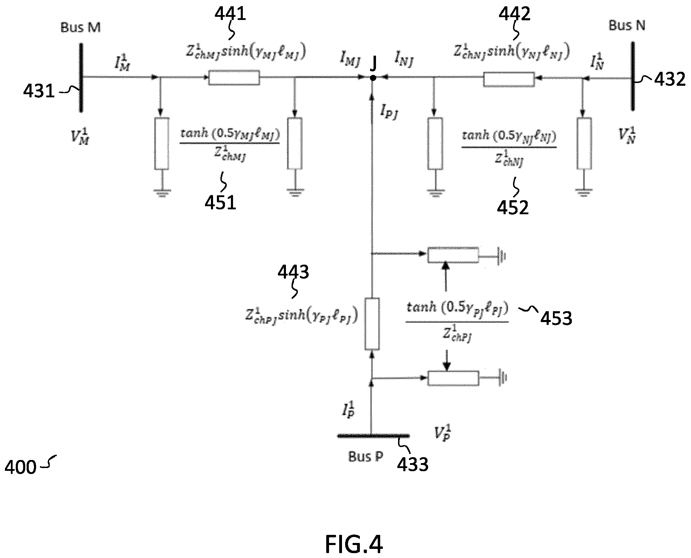

Fig. 4 illustrates a distributed (R-L-C) model of a three terminal network according to an embodiment of the present disclosure. In particular, Fig. 4 illustrates a distributed parameter model 400 of the network 200. According to an embodiment, the approximate model 400 is used in step-2 of Fig. 1. According to an embodiment, the distributed model is referred to as a further network model of the network 200. According to an embodiment, step-2 of Fig. 1 is an iterative method, in particular a least-squares iterative method or a root finding algorithm like, e.g., Newton's method, for parameter estimation. According to an embodiment, the parameters obtained from step-1, in particular using the model of Fig. 3, are given as an initial guess to step-2, in particular using the model of Fig. 4. The modelled network 400 comprises a power line terminated by the three terminals Bus M 431, Bus N 432, and Bus P 433 at respective ends. The parameters of the network are as follows:

$$Z_{chMJ}^1 = Z_{chNJ}^1 = \sqrt{\frac{Z1}{Y1}} ; \gamma_{MJ} = \gamma_{NJ} = \sqrt{Z1 \times Y1} ;$$

$$Z^1_{chPJ} = \sqrt{\frac{Z2}{Y2}}; \gamma_{PJ} = \sqrt{Z2 \times Y2}$$

$$Z^1_{chMJ} = Z^1_{chNJ} = \text{Characteristic impedance of the main line}$$

$$Z^1_{chPJ} = \text{Characteristic impedance of tapped line}$$

$\gamma_{MJ} = \gamma_{NJ}$ = Propagation constant of main line

$\gamma_{PJ}$ = Propagation constant of tapped line

Considering the first scenario, i.e., all the sections have same parameters, $Z^1_{chPJ} = Z^1_{chMJ}$ and $\gamma_{PJ} = \gamma_{MJ}$. The initial guess for below method, the least-square iterative method, may be provided from step-1 following: R & L from Z1 are considered as initial guess and vary C from -50% to +50% of actual value. That is,

$$R_O = Re\{Z1\}; X_o = Im\{Z1\}; B_o = \omega C_o$$

$$v_o = (R_o, X_{Lo}, B_o)^T$$

· ABCD parameters of each section are described as follows:

$$\begin{bmatrix} A_1 & B_1 \\ C_1 & D_1 \end{bmatrix} = \begin{bmatrix} \cosh(\gamma_{MJ}\ell_{MJ}) & Z^1_{chMJ}\sinh(\gamma_{MJ}\ell_{MJ}) \\ \dfrac{\sinh(\gamma_{MJ}\ell_{MJ})}{Z^1_{chMJ}} & \cosh(\gamma_{MJ}\ell_{MJ}) \end{bmatrix} \tag{5}$$

$$\begin{bmatrix} A_2 & B_2 \\ C_2 & D_2 \end{bmatrix} = \begin{bmatrix} \cosh(\gamma_{NJ}\ell_{NJ}) & Z^1_{chMJ}\sinh(\gamma_{NJ}\ell_{NJ}) \\ \dfrac{\sinh(\gamma_{NJ}\ell_{NJ})}{Z^1_{chNJ}} & \cosh(\gamma_{NJ}\ell_{NJ}) \end{bmatrix} \tag{6}$$

$$\begin{bmatrix} A_3 & B_3 \\ C_3 & D_3 \end{bmatrix} = \begin{bmatrix} \cosh(\gamma_{PJ}\ell_{PJ}) & Z^1_{chMJ}\sinh(\gamma_{pJ}\ell_{PJ}) \\ \dfrac{\sinh(\gamma_{PJ}\ell_{PJ})}{Z^1_{chpJ}} & \cosh(\gamma_{PJ}\ell_{PJ}) \end{bmatrix} \tag{7}$$

· The ABCD parameters relate the junction voltages $V_{JM}$, $V_{JN}$, and $V_{JP}$ and currents $I_{JM}$, $I_{JN}$, and $I_{JP}$ to the measured voltages and currents of the terminals 431, 432, and 433 as follows:

$$\begin{bmatrix} V^1_M \\ I^1_M \end{bmatrix} = \begin{bmatrix} A_1 & B_1 \\ C_1 & D_1 \end{bmatrix} \times \begin{bmatrix} V_{JM} \\ I_{JM} \end{bmatrix}; \begin{bmatrix} V_{JM} \\ I_{JM} \end{bmatrix} = \begin{bmatrix} D_1 & -B_1 \\ -C_1 & A_1 \end{bmatrix} \times \begin{bmatrix} V^1_M \\ I^1_M \end{bmatrix} \tag{8}$$

$$\begin{bmatrix} V^1_N \\ I^1_N \end{bmatrix} = \begin{bmatrix} A_2 & B_2 \\ C_2 & D_2 \end{bmatrix} \times \begin{bmatrix} V_{JN} \\ I_{NJ} \end{bmatrix}; \begin{bmatrix} V_{JN} \\ I_{NJ} \end{bmatrix} = \begin{bmatrix} D_2 & -B_2 \\ -C_2 & A_2 \end{bmatrix} \times \begin{bmatrix} V^1_N \\ I^1_N \end{bmatrix} \tag{9}$$

$$\begin{bmatrix} V_P^1 \\ I_P^1 \end{bmatrix} = \begin{bmatrix} A_3 & B_3 \\ C_3 & D_3 \end{bmatrix} \times \begin{bmatrix} V_{JP} \\ I_{PJ} \end{bmatrix}; \begin{bmatrix} V_{JP} \\ I_{PJ} \end{bmatrix} = \begin{bmatrix} D_3 & -B_3 \\ -C_3 & A_3 \end{bmatrix} \times \begin{bmatrix} V_P^1 \\ I_P^1 \end{bmatrix} \qquad (10)$$

By equating Junction voltage when calculated from terminals M 431 & P 433, we get $V_{JM} - V_{JP} = 0$,

$$D_1 V_M^1 - B_1 I_M^1 - D_3 V_P^1 + B_3 I_P^1 = 0 \qquad (11)$$

· Substituting eq.(5)-(7) into eq.(11) yields:

$$\cosh\left(\sqrt{Z1Y1} \times \ell_{MJ}\right) V_M^1 - \sqrt{\frac{Z1}{Y1}} \sinh\left(\sqrt{Z1Y1} \times \ell_{MJ}\right) I_M^1 - \cosh\left(\sqrt{Z2Y2} \times \ell_{PJ}\right) V_P^1$$

$$+ \sqrt{\frac{Z2}{Y2}} \sinh\left(\sqrt{Z2Y2} \times \ell_{PJ}\right) I_P^1 = 0 \qquad (12)$$

· By equating Junction voltage when calculated from terminal N & P, we get $V_{JN} - V_{JP} = 0$,

$$D_2 V_N^1 - B_2 I_N^1 - D_3 V_P^1 + B_3 I_P^1 = 0 \qquad (13)$$

· Substituting eq.(5)-(7) into eq.(13) yields:

$$\cosh\left(\sqrt{Z1Y1} \times \ell_{NJ}\right) V_N^1 - \sqrt{\frac{Z1}{Y1}} \sinh\left(\sqrt{Z1Y1} \times \ell_{NJ}\right) I_N^1 - \cosh\left(\sqrt{Z2Y2} \times \ell_{PJ}\right) V_P^1$$

$$+ \sqrt{\frac{Z2}{Y2}} \sinh\left(\sqrt{Z2Y2} \times \ell_{PJ}\right) I_P^1 = 0 \qquad (14)$$

· Applying KCL at the junction J yields:

$$I_{MJ} + I_{NJ} + I_{PJ} = 0 \qquad (15)$$

From eq.(8)-(10), $I_{MJ}$, $I_{NJ}$ and $I_{PJ}$ are calculated as:

$$I_{MJ} = -C_1 V_M^1 + A_1 I_M^1 = -\frac{\sinh\left(\sqrt{Z1Y1} \times \ell_{MJ}\right)}{\sqrt{\frac{Z1}{Y1}}} V_M^1 + \cosh\left(\sqrt{Z1Y1} \times \ell_{MJ}\right) I_M^1 \qquad (16)$$

$$I_{NJ} = -C_2 V_M^1 + A_2 I_M^1 = -\frac{\sinh\left(\sqrt{Z1Y1} \times \ell_{NJ}\right)}{\sqrt{\frac{Z1}{Y1}}} V_N^1 + \cosh\left(\sqrt{Z1Y1} \times \ell_{NJ}\right) I_N^1 \qquad (17)$$

$$I_{PJ} = -C_3 V_P^1 + A_3 I_P^1 = -\frac{\sinh\left(\sqrt{Z2Y2} \times \ell_{PJ}\right)}{\sqrt{\dfrac{Z2}{Y2}}} V_P^1 + \cosh\left(\sqrt{Z2Y2} \times \ell_{PJ}\right) I_P^1 \qquad (18)$$

Eq. (12), (14), and (15) are of the form F(X)=0, therefore the objective functions are formulated as:

$$F_1^{3T} = \cosh\left(\sqrt{Z1Y1} \times \ell_{MJ}\right) V_M^1 - \sqrt{\frac{Z1}{Y1}} \sinh\left(\sqrt{Z1Y1} \times \ell_{MJ}\right) I_M^1 - \cosh\left(\sqrt{Z2Y2} \times \ell_{PJ}\right) V_P^1$$

$$+ \sqrt{\frac{Z2}{Y2}} \sinh\left(\sqrt{Z2Y2} \times \ell_{PJ}\right) I_P^1 = 0 \qquad (19)$$

$$F_2^{3T} = \cosh\left(\sqrt{Z1Y1} \times \ell_{NJ}\right) V_N^1 - \sqrt{\frac{Z1}{Y1}} \sinh\left(\sqrt{Z1Y1} \times \ell_{NJ}\right) I_N^1 - \cosh\left(\sqrt{Z2Y2} \times \ell_{PJ}\right) V_P^1$$

$$+ \sqrt{\frac{Z2}{Y2}} \sinh\left(\sqrt{Z2Y2} \times \ell_{PJ}\right) I_P^1 = 0 \qquad (20)$$

$$F_3^{3T} = -\frac{\sinh\left(\sqrt{Z1Y1} \times \ell_{MJ}\right)}{\sqrt{\dfrac{Z1}{Y1}}} V_M^1 + \cosh\left(\sqrt{Z1Y1} \times \ell_{MJ}\right) I_M^1 - \frac{\sin\left(\sqrt{Z1Y1} \times \ell_{NJ}\right)}{\sqrt{\dfrac{Z1}{Y1}}} V_N^1$$

$$+ \cosh\left(\sqrt{Z1Y1} \times \ell_{NJ}\right) I_N^1 - \frac{\sinh\left(\sqrt{Z2Y2} \times \ell_{PJ}\right)}{\sqrt{\dfrac{Z2}{Y2}}} V_P^1 + \cosh\left(\sqrt{Z2Y2} \times \ell_{PJ}\right) I_P^1$$

$$= 0 \qquad (21)$$

Each objective function is split into real and imaginary terms and then solved using a least-squares iterative method. The unknowns from the above non-linear equations are R1, X1 and B1. The objective functions $F_1^{3T}$ and $F_3^{3T}$ are used to solved for the unknowns. The line parameters are obtained as following:

$$R1 = R1; \; L_1 = \frac{X1}{\omega}; \; C1 = \frac{B1}{\omega}$$

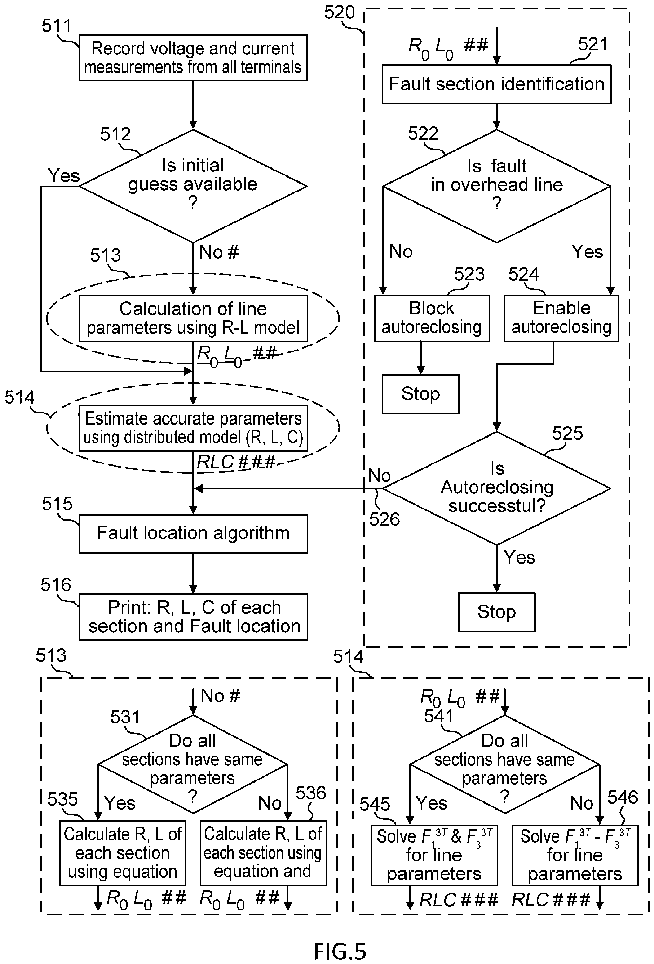

Fig. 5 illustrates a flowchart of a method according to an embodiment of the present disclosure. Fig, 5 may be a detailed embodiment of Fig. 1. At 511, the voltage and current measurements from all terminals are recorded. The voltage and current measurements from all terminals may be obtained, received, stored, or the like. At 512, the availability of initial guess is determined. In the negative, at 513, power line parameters are calculated using R-L model of the network. In the affirmative, the initial guesses, in particular of the line parameters, are fed directly to 514. At 514, further parameters are estimated using a distributed model of the network based on the line parameters of previous steps.

According to an embodiment, the decision of 512 is omitted and the recorded voltage and current measurements from all terminals are directly fed to 513. According to an embodiment, 513 is omitted and the initial guess and/or the recorded voltage and current measurements from all terminals are directly fed to 514. The line parameters estimated at 514 may be more accurate than the line parameters calculated at 513. At 513, the parameters are calculated based on eq.(3) 535 or on eq.(3) and eq.(4) 536 based on the differences in parameters of three sections 531. Similarly, at 514, the parameters are calculated based on eq.(19) and eq.(21) 545 or on eq.(19) to eq.(21) 546 based on the differences in parameters of three sections 541. The line parameters, whether they come from initial guess or calculated at 513, are fed to 521, where the fault section is identified. At 522, whether the fault is in overhead line is determined. In the negative, auto-reclosing is blocked, i.e., disabled from operating, acting, or the like, at 523. In the affirmative, auto-reclosing is enabled at 524. Then, at 525, whether auto-reclosing is successful or not is determined at 525. In the affirmative, the algorithm is terminated. In the negative, 515 is executed. According to an embodiment, 514 and 520 are performed simultaneously.

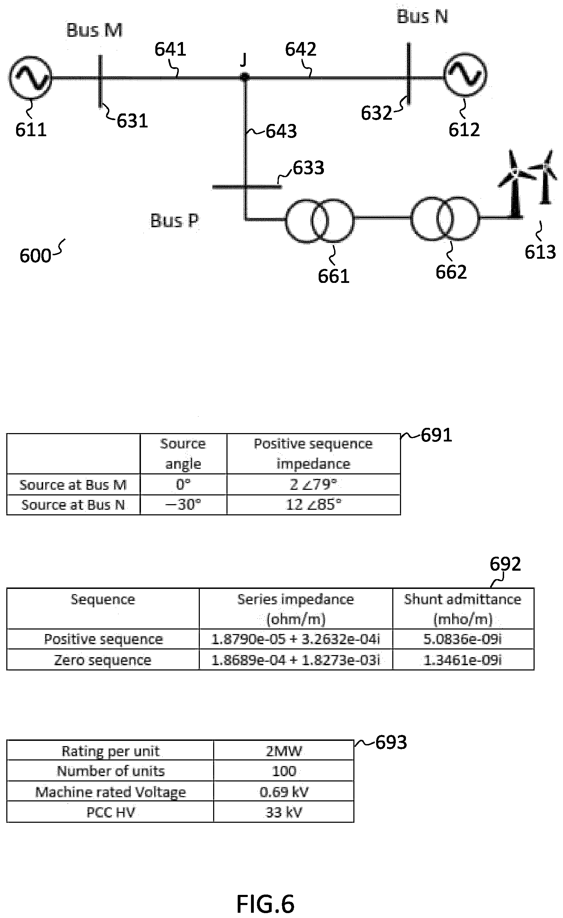

Fig. 6 illustrates a diagram of a three terminal network according to an embodiment of the present disclosure. In particular, the network 600 comprises a power line terminated by the three terminals Bus M 631, Bus N 632, and Bus P 633 at respective ends. The portions of the power line from the point J to the respective three terminals 631, 632, and 633 are referred to as a first section MJ 641, a second section NJ 642, and a third section PJ 643, respectively. Each of the three terminals 631, 632, and 633 are coupled to respective power sources 611, 612, and 613. The first power source 611 and the second power source 612 are conventional power sources, including but not limited to a synchronous generator. The third power source 613 is an unconventional power source, including but not limited to an asynchronous generator, more particularly a type IV wind turbine generator, WTG, and is coupled to the third terminal 633 via a first transformer 661 and a second transformer 662. According to an embodiment, the first transformer 661 and the second transformer 662 are omitted.

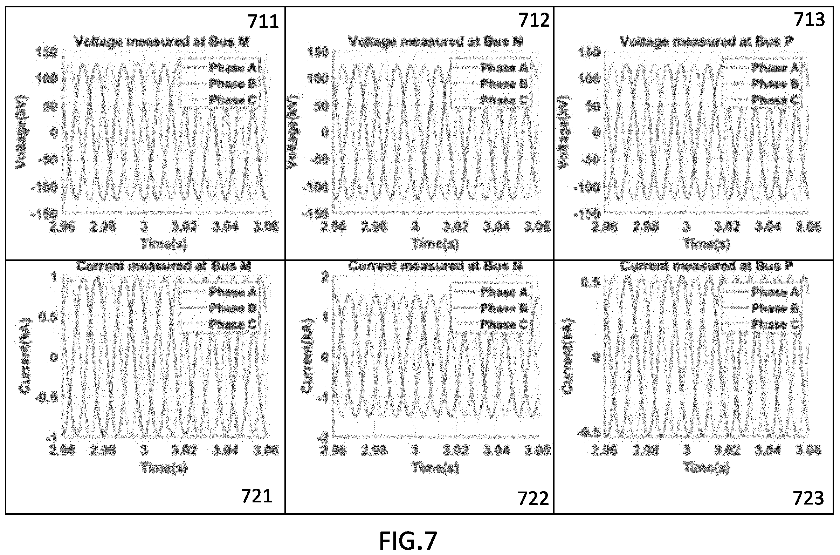

The network 600 is simulated in EMTDC (Electromagnetic Transients including DC) tool. The proposed algorithm has been implemented in MATLAB scripts. The method according to an embodiment of the present disclosure, in particular following the flow chart of Fig. 5, has been implemented on a 220 kV 50Hz network 600, with line lengths of each section being: MJ=80km, NJ=40km, and PJ=20km. Table 691, 692, and 693 illustrate source parameters, line parameters, and type IV WTG parameters, respectively. The simulation results considering a scenario wherein all three sections MJ 641, NJ 642, and PJ 643 having the same parameters and WTG 613 at full load are shown in Fig. 7, Fig. 8, and Fig. 9.

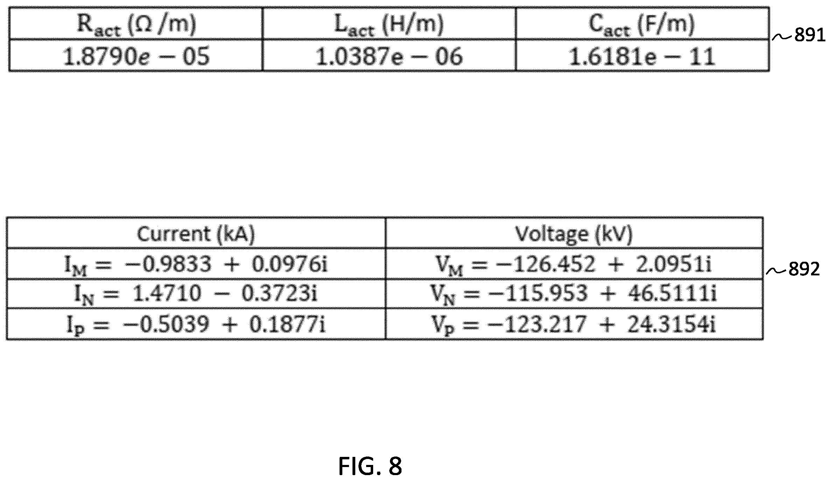

Fig. 7 illustrates graphical simulation results of a three terminal network according to an embodiment of the present disclosure. In particular, Fig. 7 illustrates the voltage and current phasors are obtained using Discrete Fourier Transform. Fig. 8 illustrates tables of simulation results of a three terminal network according to an embodiment of the present disclosure.

With reference to Fig. 1a) and Fig. 5, the following shows a method according to an embodiment of the present disclosure, wherein the initial guess is assumed to be unavailable, i.e., the line parameters inputted to 514 are calculated using R-L model at 513.

In the following, the first scenario is considered.

- Scenario 1: All sections, MJ 641, NJ 642 and PJ 643, have the same parameters.

  • Step-1: Initial guess calculation 513.

Z1 is calculated 535 using eq.(3) as following:

$$Z_1 = \frac{V_M - V_N}{I_M \ell_{MJ} - I_N \ell_{NJ}} = \frac{(-126.452 + 2.9051j) - (-115.953 + 46.511j)}{(-0.9833 + 0.0976j)(8)10^4 - (1.4710 - 0.3723j)(2)10^4}$$

$$= 3.609 \times 10^{-5} + 3.2365 \times 10^{-4}j \left(\frac{\Omega}{m}\right) \tag{22}$$

  • Step-2: Estimation of line parameters 514.

The parameters obtained from step-1 are given as initial guess to least-squares iterative method:

$$R_o = 3.6096 \times 10^{-5}, X_o = 3.2365 \times 10^{-4}, C_o = 0.5 C_{act} \tag{23}$$

$$v0 = [Real\{Z1\}; Imag\{Z1\}; 1.5 \times Imag(Y1_{act})] \qquad (24)$$

$$v0 = [3.6096 \times 10^{-5}; 3.2365 \times 10^{-4}; 7.6253 \times 10^{-9}] \qquad (25)$$

wherein $v0$ dentoes the initial guess calculated in step 1 above. The unknown vector is estimated using Least square method, as follows:

$$v_{est} = [1.8861 \times 10^{-5}; 3.263 \times 10^{-4}; 5.0797 \times 10^{-9}] \qquad (26)$$

· The estimated parameters are obtained using $R1 = R1$; $L_1 = \frac{X1}{\omega}$; $C1 = \frac{B1}{\omega}$ as follows:

$$R1 = 1.8861 \times 10^{-5} \left(\frac{\Omega}{m}\right) \qquad (27)$$

$$L1 = \frac{X1}{2\pi f} = \frac{3.263 \times 10^{-4}}{2\pi \times 50} = 1.0386 \times 10^{-6} \left(\frac{H}{m}\right) \qquad (28)$$

$$C1 = \frac{B1}{2\pi f} = \frac{5.0797 \times 10^{-9}}{2\pi \times 50} = 1.6169 \times 10^{-11} \left(\frac{F}{m}\right) \qquad (29)$$

The Percentage error of each parameter can be calculated as:

$$\%|R_{err}| = \left|\frac{R_1 - R_{act}}{R_{act}}\right| \times 100 = \left|\frac{1.8861 \times 10^{-5} - 1.8790 \times 10^{-5}}{1.8790 \times 10^{-5}}\right| \times 100 = 0.3786 \quad (30)$$

$$\%|L_{err}| = \left|\frac{L1 - L_{act}}{L_{act}}\right| \times 100 = \left|\frac{1.0386 \times 10^{-6} - 1.0387 \times 10^{-6}}{1.0387 \times 10^{-6}}\right| \times 100 = 0.005 \quad (31)$$

$$\%|C_{err}| = \left|\frac{C1 - C_{act}}{C_{act}}\right| \times 100 = \left|\frac{1.6169 \times 10^{-11} - 1.6181 \times 10^{-11}}{1.6181 \times 10^{-11}}\right| \times 100 = 0.0764 \quad (32)$$

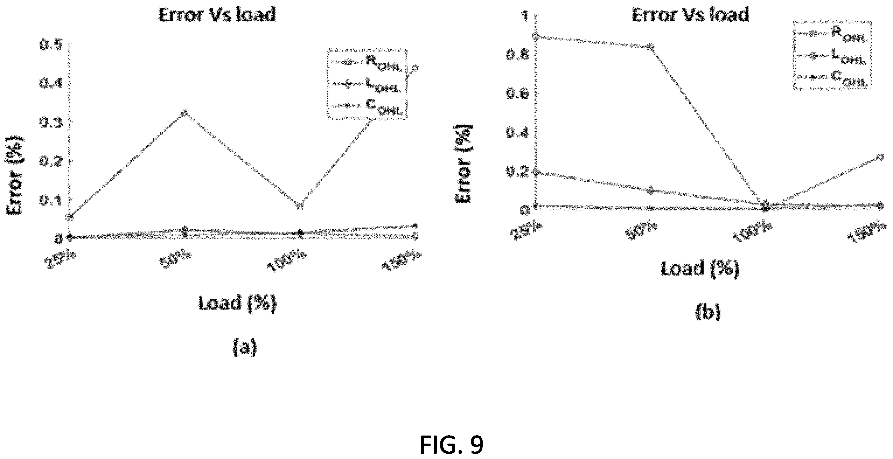

· Fig. 9 illustrates percent errors of parameters computed based on a method according to an embodiment of the present disclosure.

In the following, the second scenario is considered.

- Scenario 2: MJ 641 and NJ 642 have the same parameters and PJ 643has parameters different from the parameters of MJ 641 and NJ 642. In particular, the portions of the main line 641 and 642 are considered as overhead line and PJ, the tapped line, is considered as underground cable.

• Step-1: Initial guess calculation 513. In particular the line parameters are calculated at 536.

• Step-2: Estimation of line parameters 514.

The initial guess for the least-square iterative method is provided from step one as following: The following R & L from Z1 & Z2 are considered as initial guess and C is varied from -50% to +50% of actual value:

$$R1_0 = RE\{Z1\}, X1_0 = Im\{Z1\}, B1_0 = \omega C1_0$$

$$R2_0 = RE\{Z2\}, X2_0 = Im\{Z2\}, B2_0 = \omega C2_0$$

$$v_0 = (R1_0, X1_{L0}, B1_0, R2_0, X2_{L0}, B2_0)^T$$

Each objective function is split into real and imaginary part and then solved using least-squares iterative method. The unknowns from the above non-linear equations are R1, X1, B1, R2, X2 and B2. The objective functions $F_1^{3T}$ to $F_3^{3T}$ (eq.(19) to eq.(21)) are used to solve for the unknowns. The line parameters are obtained as following

$$R1 = R1, L1 = \frac{X1}{\omega}, C1 = \frac{B1}{\omega}, R2 = R2, L2 = \frac{X2}{\omega}, C2 = \frac{B2}{\omega} \qquad (33)$$

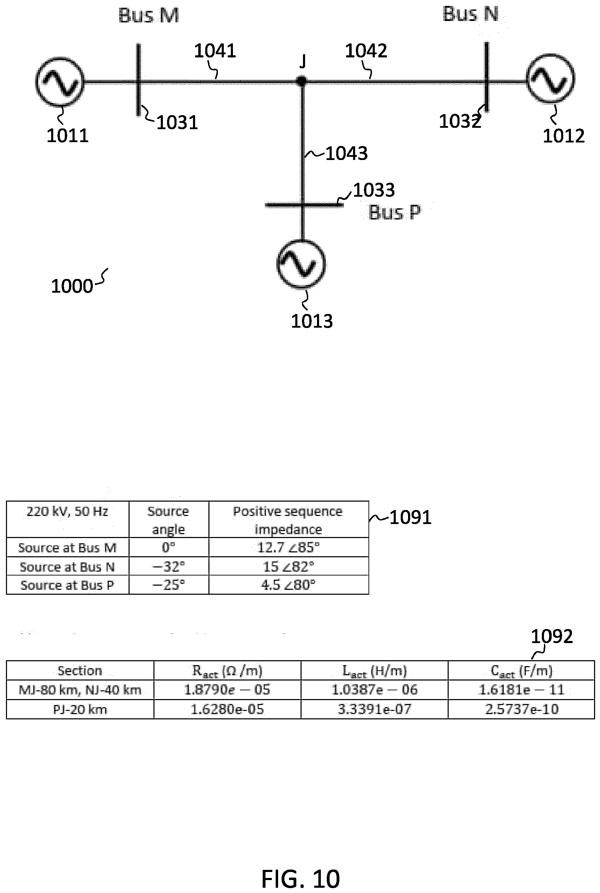

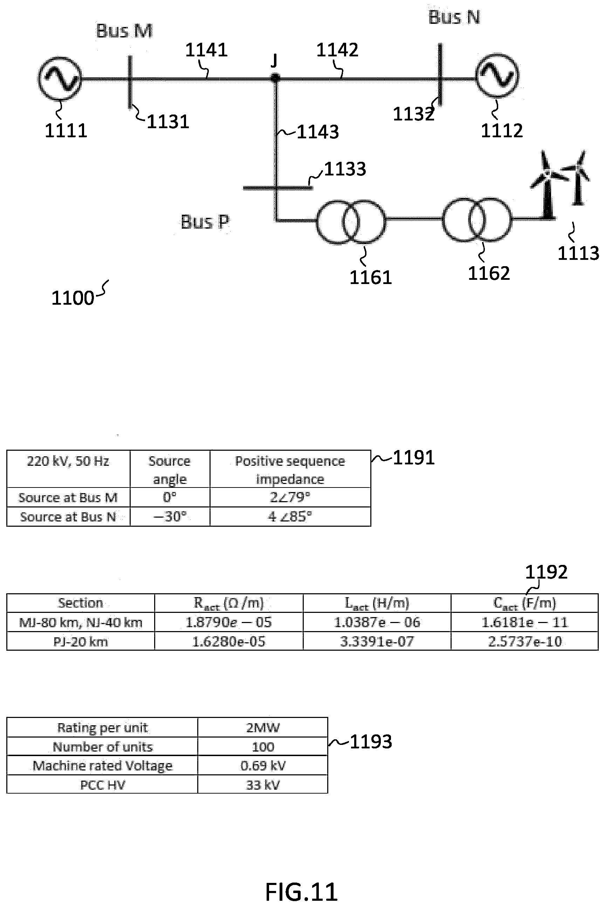

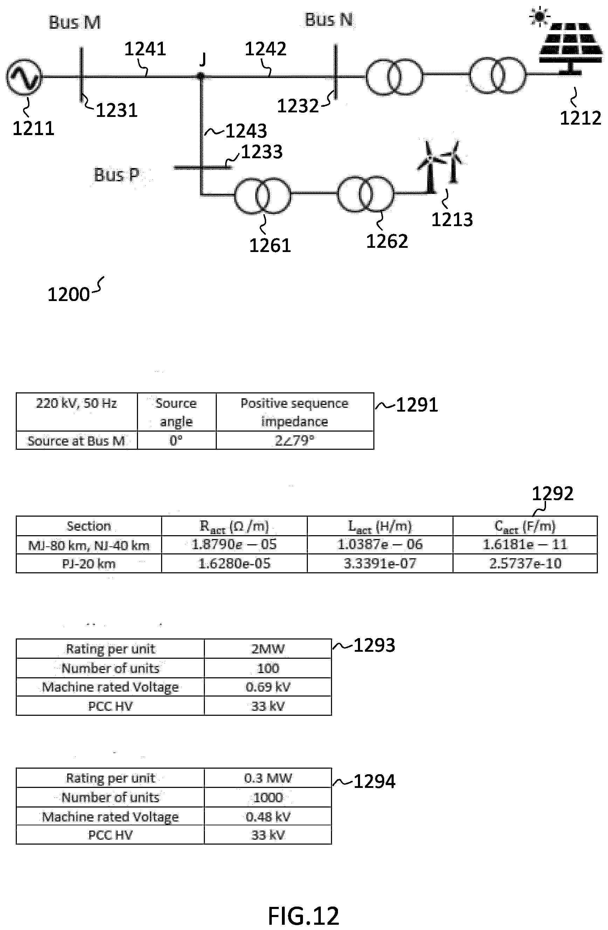

In the following, a method according to an embodiment, in particular following the logic of Fig. 2, is tested with the following configurations: 1) Conventional sources at all the terminals (e.g. Fig. 10); 2) Type IV wind farm at terminal P (e.g. Fig. 11); and 3) Solar plant at terminal N and type IV wind farm at terminal P (e.g. Fig. 12).

Fig. 10 illustrates a diagram of a three terminal network according to an embodiment of the present disclosure. In particular, the network 1000 comprises a power line terminated by the three terminals Bus M 1031, Bus N 1032, and Bus P 1033 at respective ends. The portions of the power line from the point J to the respective three terminals 1031, 1032, and 1033 are referred to as a first section MJ 1041, a second section NJ 1042, and a third section PJ 1043, respectively. Each of the three terminals 1031, 1032, and 1033 are coupled to respective power sources 1011, 1012, and 1013. The first power source 1011, the second power source 1012, and the third power source 1013 are conventional power sources, including but not limited to a synchronous generator. Table 1091 and 1092 illustrate source parameters and line parameters (positive sequence).

Fig. 11 illustrates a diagram of a three terminal network according to an embodiment of the present disclosure. In particular, the network 1100 comprises a power line terminated by the three terminals Bus M 1131, Bus N 1132, and Bus P 1133 at respective ends. The portions of the power line from the point J to the respective three terminals 1131, 1132, and 1133 are referred to as a first section MJ 1141, a second section NJ 1142, and a third section PJ 1143, respectively. Each of the three terminals 1131, 1132, and 1133 are coupled to respective power sources 1111, 1112, and 1113. The first power source 1111 and the second power source 1112 are conventional power sources, including but not limited to a synchronous generator. The third power source 1113 is an unconventional power source, including but not limited to an asynchronous generator, more particularly a type IV wind turbine generator, WTG, and is coupled to the third terminal 1133 via a first transformer 1161 and a second transformer 1162. According to an embodiment, the first transformer 1161 and the second transformer 1162 are omitted. Table 1191, 1192, and 1193 illustrate source parameters, line parameters (positive sequence), and type IV WTG parameters, respectively.

Fig. 12 illustrates a diagram of a three terminal network according to an embodiment of the present disclosure. In particular, the network 1200 comprises a power line terminated by the three terminals Bus M 1231, Bus N 1232, and Bus P 1233 at respective ends. The portions of the power line from the point J to the respective three terminals 1231, 1232, and 1233 are referred to as a first section MJ 1241, a second section NJ 1242, and a third section PJ 1243, respectively. Each of the three terminals 1231, 1232, and 1233 are coupled to respective power sources 1211, 1212, and 1213. The first power source 1211 is a conventional power source, including but not limited to a synchronous generator. The second power source 1212 is an unconventional power source, including but not limited to an asynchronous generator, more particularly a solar plant. The third power source 1213 is an unconventional power source, including but not limited to an asynchronous generator, more particularly a type IV wind turbine generator, WTG, and is coupled to the third terminal 1233 via a first transformer 1261 and a second transformer 1262. According to an embodiment, the first transformer 1261 and the second transformer 1262 are omitted. Table 1291, 1292, 1293, and 1293 illustrate source parameters, line parameters (positive sequence), type IV WTG parameters, and solar plant parameters, respectively.

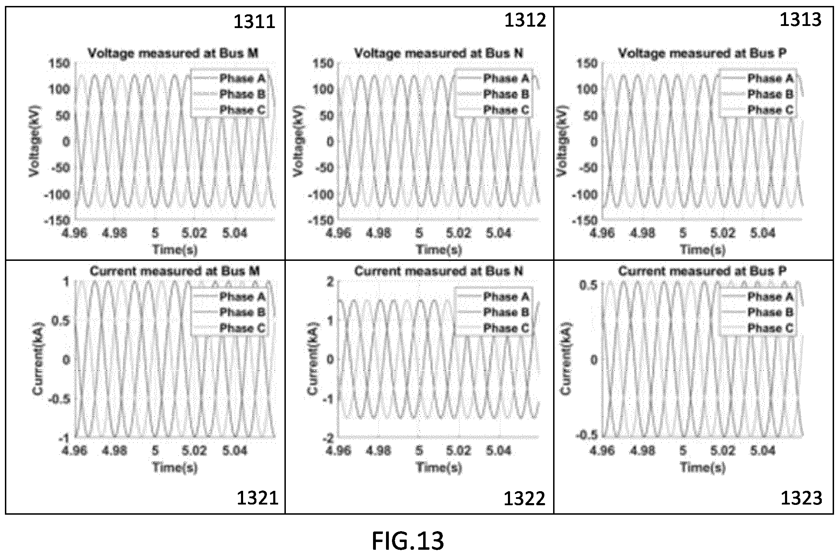

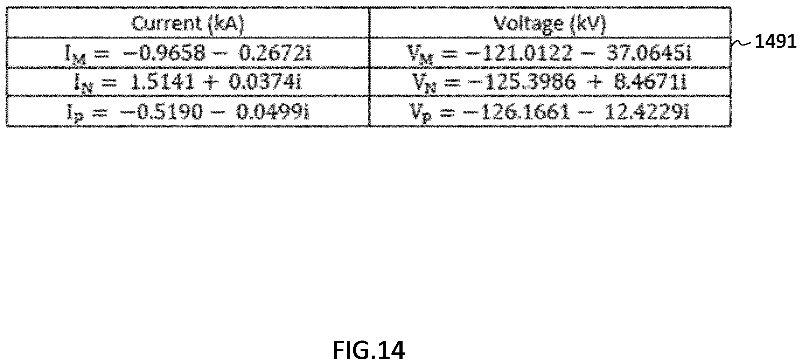

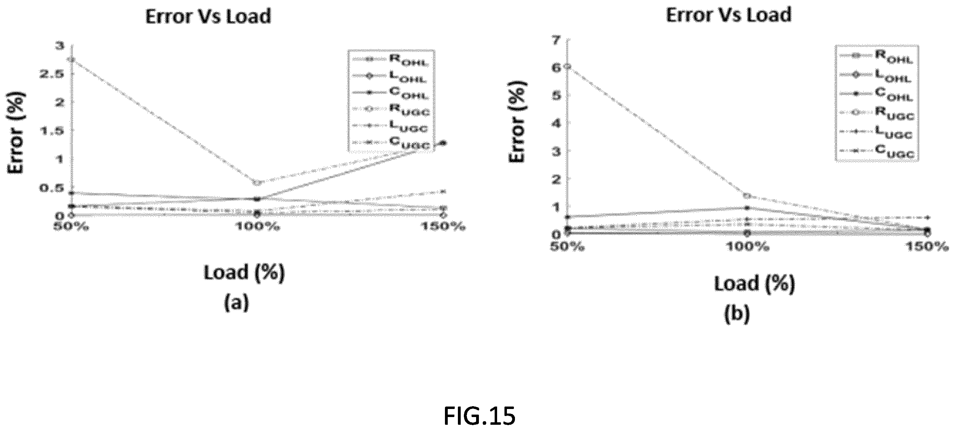

Fig. 13 to Fig. 15 show the simulation results obtained considering the network 1100 of Fig. 11. Fig. 13 illustrates graphical simulation results of a three terminal network according to an embodiment of the present disclosure. In particular, Fig. 13 shows the voltage and current phasors obtained using discrete Fourier transform. Fig. 14 illustrates a table of simulation results of a three terminal network according to an embodiment of the present disclosure. Fig. 15 illustrates percent errors of parameters computed based on a method according to an embodiment of the present disclosure.

In the following the embodiment following Fig. 5 for the network 1100 of Fig. 11 is shown.

- Step-1: Initial guess calculation 513.

Z1 is calculated using eq.(3) as following:

$$Z1 = \frac{V_M^1 - V_N^1}{I_M^1 \ell_{MJ} - I_N^1 \ell_{NJ}} = \frac{(-121.0122 - 37.0645j) - (-125.3986 + 8.4671j)}{(-0.9658 - 0.2672j)(8)10^4 - (1.5141 + 0.0374j)(4)10^4}$$

$$= 2.2376 \times 10^{-5} + 3.2664 \times 10^{-4} \left(\frac{\Omega}{m}\right) \tag{34}$$

and Z2 is calculated using eq.(4) as following:

$$Z2 = \frac{V_M^1 - V_P^1 - I_M^1 Z1 \ell_{MJ}}{(I_M^1 + I_N^1)\ell_{PJ}}$$

$$= \frac{(-121.0122 - 37.0645j) - (-126.1661 - 12.4229j) - (-0.9658 - 0.2672j)(2.2376 \times 10^{-5} + 3.2664 \times 10^{-4}j)(8) \times 10^4}{(0.5483 - 0.2297j)(2)10^4}$$

$$= 4.2560 \times 10^{-5} + 8.0114 \times 10^{-5}j \left(\frac{\Omega}{m}\right) \tag{35}$$

- Step-2: Estimation of line parameters 514.

The parameters obtained from step-1 (R, L) are given as initial guess to least-squares iterative method.

$$R1_0 = 2.2376 \times 10^{-5}, X1_0 = 3.2664 \times 10^{-4}, C1_0 = 0.5C1_{act}$$

$$R2_0 = 4.246 \times 10^{-5}, X2_0 = 8.0114 \times 10^{-5}, C2_0 = 0.5C2_{act}$$

$$v0 = \begin{bmatrix} R1_0 \\ X1_0 \\ C1_0 \\ R2_0 \\ X2_0 \\ C2_0 \end{bmatrix} = \begin{bmatrix} 2.2376 \times 10^{-5} \\ 3.2664 \times 10^{-4} \\ 7.6253 \times 10^{-9} \\ 4.2560 \times 10^{-5} \\ 8.0114 \times 10^{-5} \\ 1.2128 \times 10^{-7} \end{bmatrix} \tag{36}$$

The unknown vector is estimated using Least square method.

$$v_{est} = \begin{bmatrix} 1.8777 \times 10^{-5} \\ 3.2633 \times 10^{-4} \\ 5.0354 \times 10^{-9} \\ 1.6504 \times 10^{-5} \\ 1.0434 \times 10^{-4} \\ 8.1141 \times 10^{-8} \end{bmatrix} \tag{37}$$

The estimated parameters are obtained using eq.(33) as follows:

$$R1 = 1.8777 \times 10^{-5} \left(\frac{\Omega}{m}\right) \tag{38}$$

$$L1 = \frac{X1}{2\pi f} = \frac{3.2633 \times 10^{-4}}{2\pi \times 50} = 1.0387 \times 10^{-6} \left(\frac{H}{m}\right) \tag{39}$$

$$C1 = \frac{B1}{2\pi f} = \frac{5.0354 \times 10^{-9}}{2\pi \times 50} = 1.6028 \times 10^{-11} \left(\frac{F}{m}\right) \tag{40}$$

$$R2 = 1.6504 \times 10^{-5} \left(\frac{\Omega}{m}\right) \tag{41}$$

$$L2 = \frac{X2}{2\pi f} = \frac{1.0434 \times 10^{-4}}{2\pi \times 50} = 3.3212 \times 10^{-7} \left(\frac{H}{m}\right) \tag{42}$$

$$C2 = \frac{B2}{2\pi f} = \frac{8.1141 \times 10^{-8}}{2\pi \times 50} = 2.5828 \times 10^{-10} \left(\frac{F}{m}\right) \tag{43}$$

Percentage error of each parameter can be calculated as:

$$\%|R_{err}| = \left|\frac{R_1 - R1_{act}}{R1_{act}}\right| \times 100 = \left|\frac{1.8777 \times 10^{-5} - 1.8790 \times 10^{-5}}{1.8790 \times 10^{-5}}\right| \times 100 = 0.0727 \tag{44}$$

$$\%|L_{err}| = \left|\frac{L1 - L1_{act}}{L1_{act}}\right| \times 100 = \left|\frac{1.0387 \times 10^{-6} - 1.0387 \times 10^{-6}}{1.0387 \times 10^{-6}}\right| \times 100 = 0.0036 \tag{45}$$

$$\%|C_{err}| = \left|\frac{C1 - C1_{act}}{C1_{act}}\right| \times 100 = \left|\frac{1.6028 \times 10^{-11} - 1.6181 \times 10^{-11}}{1.6181 \times 10^{-11}}\right| \times 100 = 0.9456 \tag{46}$$

$$\%|R_{err}| = \left|\frac{R2 - R2_{act}}{R2_{act}}\right| \times 100 = \left|\frac{1.6504 \times 10^{-5} - 1.6280 \times 10^{-5}}{1.6280 \times 10^{-5}}\right| \times 100 = 1.3781 \tag{47}$$

$$\%|L_{err}| = \left|\frac{L2 - L2_{act}}{L2_{act}}\right| \times 100 = \left|\frac{3.3212 \times 10^{-7} - 3.3391 \times 10^{-7}}{3.3391 \times 10^{-7}}\right| \times 100 = 0.5361 \tag{48}$$

$$\% |C_{err}| = \left| \frac{C2 - C2_{act}}{C2_{act}} \right| \times 100 = \left| \frac{2.5828 \times 10^{-10} - 2.5737 \times 10^{-10}}{2.5737 \times 10^{-10}} \right| \times 100 = 0.3535 \ (49)$$

· Fig. 15 illustrates percent errors of parameters computed based on a method according to an embodiment of the present disclosure.

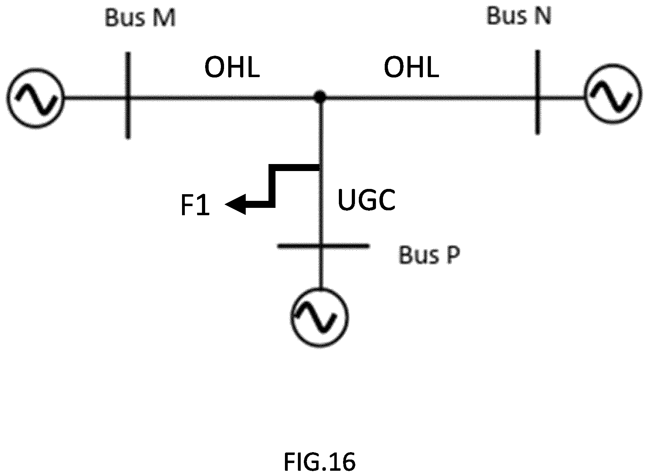

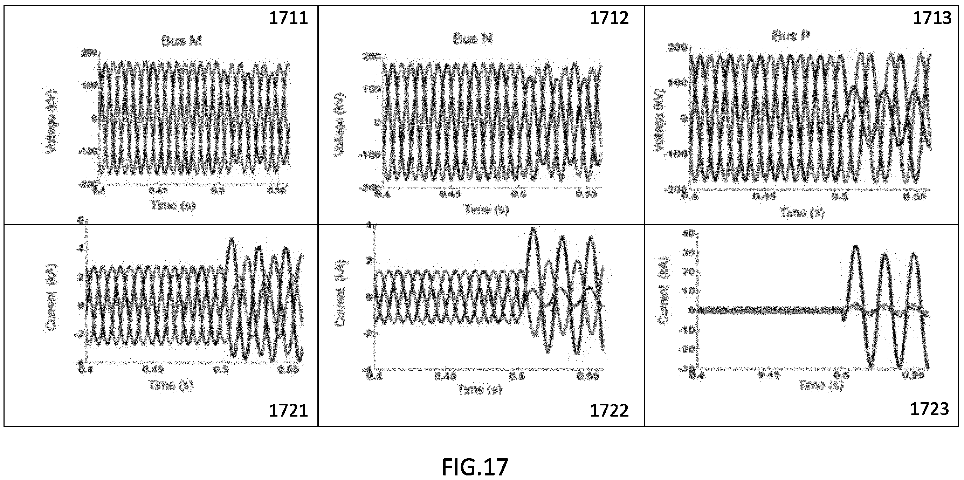

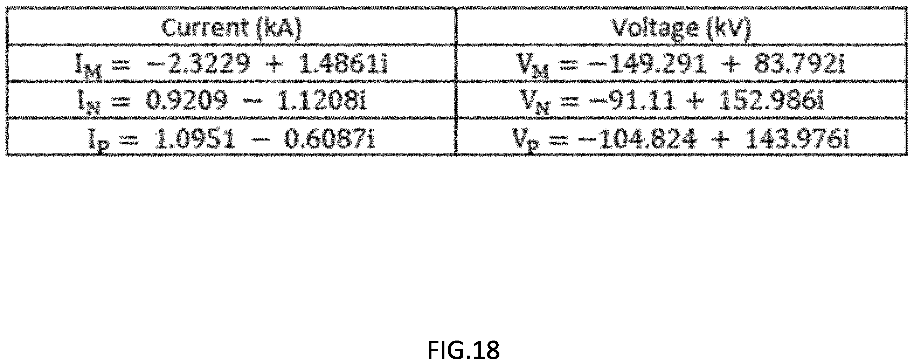

Fig. 17 and Fig. 18 shows the simulation results obtained considering the network of Fig. 16 with AG fault at F1 on PJ section at 25% (5km) of the line from Bus P with fault resistance of 2 Ω. According to an embodiment, the network of Fig. 16 is the network 1000 of Fig. 10. Fig. 17 illustrates graphical simulation results of a three terminal network according to an embodiment of the present disclosure. In particular, Fig. 17 shows the voltage and current phasors obtained using discrete Fourier transform. Fig. 18 illustrates a table of simulation results of a three terminal network according to an embodiment of the present disclosure.

In the following the embodiment following Fig. 5 for the network of Fig. 16 is shown.

• Step-1: Initial guess calculation 513.

Z1 is calculated using eq.(3) as following:

$$Z1 = \frac{V_M^1 - V_N^1}{I_M^1 \ell_{MJ} - I_N^1 \ell_{NJ}} = \frac{(-149.291 + 83.792j) - (-91.11 + 152.986j)}{(-2.3229 + 1.4861j)(8)10^4 - (0.9209 - 1.1208j)(4)10^4}$$

$$= 2.1277 \times 10^{-5} + 3.2640 \times 10^{-4}j \left( \frac{\Omega}{m} \right) \tag{50}$$

and Z2 is calculated using eq.(4) as following:

$$Z2 = \frac{V_M^1 - V_P^1 - I_M^1 Z1 \ell_{MJ}}{(I_M^1 + I_N^1)\ell_{PJ}}$$

$$= \frac{(-149.291 + 83.792j) - (-104.824 + 143.976j) - (-2.3229 + 1.4861j)(2.12779 \times 10^{-5} + 3.2640 \times 10^{-4j})(8) \times 10^4}{(-1.4020 - 0.3654j)(2)10^4}$$

$$= 3.9098 \times 10^{-5} + 8.3618 \times 10^{-5}j \left( \frac{\Omega}{m} \right) \tag{51}$$

• Step-2: Estimation of line parameters 514.

The parameters obtained from step-1(R, L) are given as initial guess to least-squares iterative method.

$$R1_0 = 2.1277 \times 10^{-5}, X1_0 = 3.2640 \times 10^{-4}, C1_0 = 0.5C1_{act}$$

$$R2_0 = 3.9098 \times 10^{-5}, X2_0 = 8.3618 \times 10^{-5}, C2_0 = 0.5C2_{act}$$

$$v0 = \begin{bmatrix} R1_0 \\ X1_0 \\ C1_0 \\ R2_0 \\ X2_0 \\ C2_0 \end{bmatrix} = \begin{bmatrix} 2.1277 \times 10^{-5} \\ 3.2640 \times 10^{-4} \\ 7.6253 \times 10^{-9} \\ 3.9098 \times 10^{-5} \\ 8.3618 \times 10^{-5} \\ 1.2128 \times 10^{-7} \end{bmatrix} \tag{52}$$

The unknown vector is estimated using Least square method.

$$V_{est} = \begin{bmatrix} 1.8724 \times 10^{-5} \\ 3.2629 \times 10^{-4} \\ 5.2312 \times 10^{-9} \\ 1.5902 \times 10^{-5} \\ 1.0528 \times 10^{-4} \\ 8.0091 \times 10^{-8} \end{bmatrix} \tag{53}$$

The estimated parameters are obtained using eq.(33) as follows:

$$R1 = 1.8724 \times 10^{-5} \left( \frac{\Omega}{m} \right) \tag{54}$$

$$L1 = \frac{X1}{2\pi f} = \frac{3.2629 \times 10^{-4}}{2\pi \times 50} = 1.0386 \times 10^{-6} \left( \frac{H}{m} \right) \tag{55}$$

$$C1 = \frac{B1}{2\pi f} = \frac{5.2312 \times 10^{-9}}{2\pi \times 50} = 1.6651 \times 10^{-11} \left( \frac{F}{m} \right) \tag{56}$$

$$R2 = 1.5902 \times 10^{-5} \left( \frac{\Omega}{m} \right) \tag{57}$$

$$L2 = \frac{X2}{2\pi f} = \frac{1.0528 \times 10^{-4}}{2\pi \times 50} = 3.3513 \times 10^{-7} \left( \frac{H}{m} \right) \tag{58}$$

$$C2 = \frac{B2}{2\pi f} = \frac{8.0091 \times 10^{-8}}{2\pi \times 50} = 2.5494 \times 10^{-10} \left( \frac{F}{m} \right) \tag{59}$$

Percentage error of each parameter can be calculated as:

$$\%|R_{err}| = \left| \frac{R_1 - R1_{act}}{R1_{act}} \right| \times 100 = \left| \frac{1.8724 \times 10^{-5} - 1.8790 \times 10^{-5}}{1.8790 \times 10^{-5}} \right| \times 100 = 0.3533 \tag{60}$$

$$\%|L_{err}| = \left| \frac{L1 - L1_{act}}{L1_{act}} \right| \times 100 = \left| \frac{1.0386 \times 10^{-6} - 1.0387 \times 10^{-6}}{1.0387 \times 10^{-6}} \right| \times 100 = 0.0076 \tag{61}$$

$$\%|C_{err}| = \left| \frac{C1 - C1_{act}}{C1_{act}} \right| \times 100 = \left| \frac{1.6651 \times 10^{-11} - 1.6181 \times 10^{-11}}{1.6181 \times 10^{-11}} \right| \times 100 = 2.9040 \tag{62}$$

$$\%|R_{err}| = \left|\frac{R2 - R2_{act}}{R2_{act}}\right| \times 100 = \left|\frac{1.5902 \times 10^{-5} - 1.6280 \times 10^{-5}}{1.6280 \times 10^{-5}}\right| \times 100 = 2.3200 \ (63)$$

$$\%|L_{err}| = \left|\frac{L2 - L2_{act}}{L2_{act}}\right| \times 100 = \left|\frac{3.3513 \times 10^{-7} - 3.3391 \times 10^{-7}}{3.3391 \times 10^{-7}}\right| \times 100 = 0.3648 \ (64)$$

$$\%|C_{err}| = \left|\frac{C2 - C2_{act}}{C2_{act}}\right| \times 100 = \left|\frac{2.5494 \times 10^{-10} - 2.5737 \times 10^{-10}}{2.5737 \times 10^{-10}}\right| \times 100 = 0.9465 \ (65)$$

According to an embodiment, an auto-reclosing protection scheme is implemented. According to an embodiment, the fault section is identified as," section PJ". According to an embodiment, the corresponding fault loop is executed from the faulted section information, the fault location is calculated as 5.01 km from Bus M. According to an embodiment, the absolute percentage of fault location error is 0.01% for a 120 km transmission line for the simulated case.

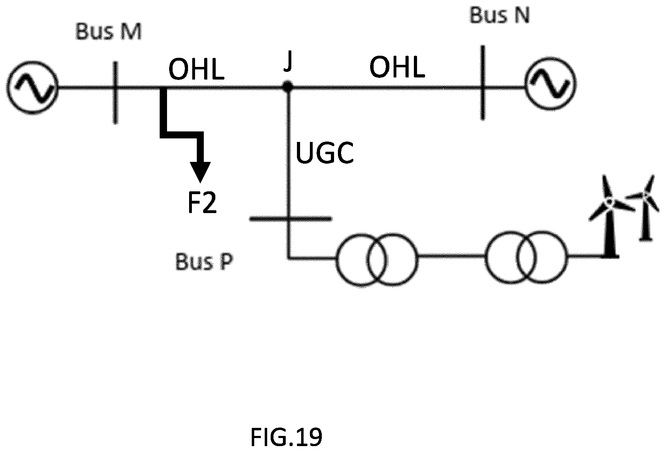

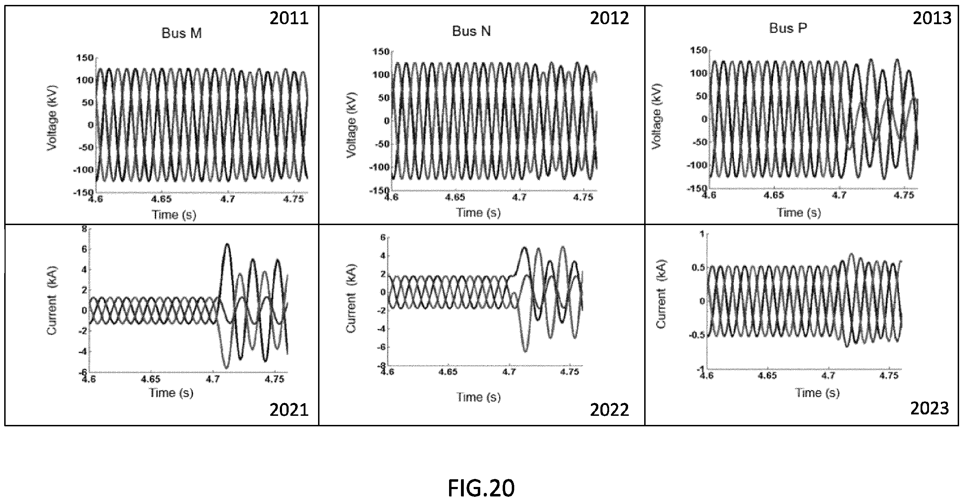

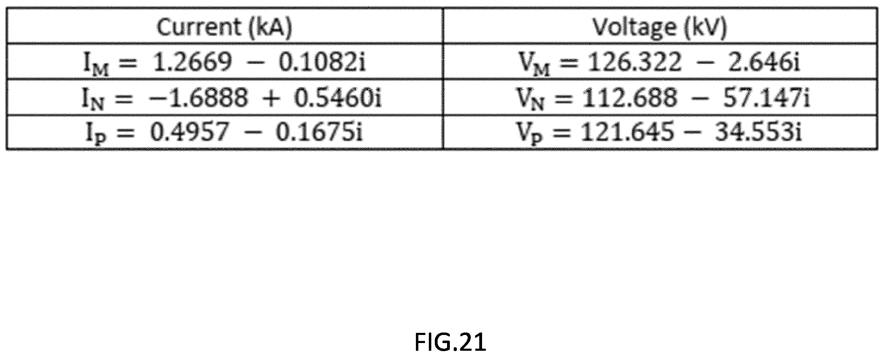

Fig. 20 and Fig. 21 show the simulation results obtained considering the network of Fig. 19 with AB fault F2 on MJ section at 87.5% (70km) of the line from Bus M with fault resistance of 10 Ω. According to an embodiment, the network of Fig. 19 is the network 1100 of Fig. 11.

Fig. 20 illustrates graphical simulation results of a three terminal network according to an embodiment of the present disclosure. In particular, Fig. 20 shows the voltage and current phasors obtained using discrete Fourier transform. Fig. 21 illustrates a table of simulation results of a three terminal network according to an embodiment of the present disclosure.

- Step-1: Initial guess calculation 513.

Z1 is calculated using eq.(3) as following:

$$Z1 = \frac{V_M^1 - V_N^1}{I_M^1 \ell_{MJ} - I_N^1 \ell_{NJ}} = \frac{(-1126.322 - 2.646j) - (112.688 - 57.1471j)}{(1.2669 - 0.1082j)(8)10^4 - (-1.6888 + 0.5460j)(4)10^4}$$

$$= 2.1758 \times 10^{-5} + 3.2659 \times 10^{-4} j \left(\frac{\Omega}{m}\right) \tag{66}$$

and Z2 is calculated using eq.(4) as following:

$$Z2 = \frac{V_M^1 - V_P^1 - I_M^1 Z1 \ell_{MJ}}{(I_M^1 + I_N^1)\ell_{PJ}}$$

$$= \frac{(126.322 - 2.646j) - (121.645 - 34.553j) - (1.2669 - 0.1082j)(2.1758 \times 10^{-5} + 3.2659 \times 10^{-4} j)(8) \times 10^4}{(-0.4219 + 0.4378j)(2)10^4}$$

$$= 3.9379 \times 10^{-5} + 7.8460 \times 10^{-5} j \left(\frac{\Omega}{m}\right) \tag{67}$$

- Step-2: Estimation of line parameters 514.

The parameters obtained from step-1 (R, L) are given as initial guess to least-squares iterative method.

$$R1_0 = 2.1758 \times 10^{-5}, X1_0 = 3.2659 \times 10^{-4}, C1_0 = 0.5C1_{act}$$

$$R2_0 = 3.9379 \times 10^{-5}, X2_0 = 7.8460 \times 10^{-5}, C2_0 = 0.5C2_{act}$$

$$v0 = \begin{bmatrix} R1_0 \\ X1_0 \\ C1_0 \\ R2_0 \\ X2_0 \\ C2_0 \end{bmatrix} = \begin{bmatrix} 2.1758 \times 10^{-5} \\ 3.2659 \times 10^{-4} \\ 7.6253 \times 10^{-9} \\ 3.9379 \times 10^{-5} \\ 7.8460 \times 10^{-5} \\ 1.2128 \times 10^{-7} \end{bmatrix} \tag{68}$$

The unknown vector is estimated using Least square method.

$$v_{est} = \begin{bmatrix} 1.8855 \times 10^{-5} \\ 3.2627 \times 10^{-4} \\ 5.0050 \times 10^{-9} \\ 1.5932 \times 10^{-5} \\ 1.0439 \times 10^{-4} \\ 8.1331 \times 10^{-8} \end{bmatrix} \tag{69}$$

The estimated parameters are obtained using eq.(33) as follows:

$$R1 = 1.8855 \times 10^{-5} \left(\frac{\Omega}{m}\right) \tag{70}$$

$$L1 = \frac{X1}{2\pi f} = \frac{3.2627 \times 10^{-4}}{2\pi \times 50} = 1.0386 \times 10^{-6} \left(\frac{H}{m}\right) \tag{71}$$

$$C1 = \frac{B1}{2\pi f} = \frac{5.0050 \times 10^{-9}}{2\pi \times 50} = 1.5931 \times 10^{-11} \left(\frac{F}{m}\right) \tag{72}$$

$$R2 = 1.5932 \times 10^{-5} \left(\frac{\Omega}{m}\right) \tag{73}$$

$$L2 = \frac{X2}{2\pi f} = \frac{1.0439 \times 10^{-4}}{2\pi \times 50} = 3.3230 \times 10^{-7} \left(\frac{H}{m}\right) \tag{74}$$

$$C2 = \frac{B2}{2\pi f} = \frac{8.1331 \times 10^{-8}}{2\pi \times 50} = 2.5889 \times 10^{-10} \left(\frac{F}{m}\right) \tag{75}$$

Percentage error of each parameter can be calculated as:

$$\%|R_{err}| = \left|\frac{R_1 - R1_{act}}{R1_{act}}\right| \times 100 = \left|\frac{1.8855 \times 10^{-5} - 1.8790 \times 10^{-5}}{1.8790 \times 10^{-5}}\right| \times 100 = 0.3340 \tag{76}$$

$$\%|L_{err}| = \left|\frac{L1 - L1_{act}}{L1_{act}}\right| \times 100 = \left|\frac{1.0386 \times 10^{-6} - 1.0387 \times 10^{-6}}{1.0387 \times 10^{-6}}\right| \times 100 = 0.0130 \quad (77)$$

$$\%|C_{err}| = \left|\frac{C1 - C1_{act}}{C1_{act}}\right| \times 100 = \left|\frac{1.5931 \times 10^{-11} - 1.6181 \times 10^{-11}}{1.6181 \times 10^{-11}}\right| \times 100 = 1.5462 \quad (78)$$

$$\%|R_{err}| = \left|\frac{R2 - R2_{act}}{R2_{act}}\right| \times 100 = \left|\frac{1.5931 \times 10^{-5} - 1.6280 \times 10^{-5}}{1.6280 \times 10^{-5}}\right| \times 100 = 2.1403 \quad (79)$$

$$\%|L_{err}| = \left|\frac{L2 - L2_{act}}{L2_{act}}\right| \times 100 = \left|\frac{3.3230 \times 10^{-7} - 3.3391 \times 10^{-7}}{3.3391 \times 10^{-7}}\right| \times 100 = 0.4828 \quad (80)$$

$$\%|C_{err}| = \left|\frac{C2 - C2_{act}}{C2_{act}}\right| \times 100 = \left|\frac{2.5889 \times 10^{-10} - 2.5737 \times 10^{-10}}{2.5737 \times 10^{-10}}\right| \times 100 = 0.5873 \quad (81)$$

According to an embodiment, an auto-reclosing protection scheme is implemented. According to an embodiment, the fault section is identified as, " Section MJ". According to an embodiment, the corresponding fault loop is executed from the faulted section information, the fault location is calculated as 69.90 km from Bus M. According to an embodiment, the absolute percentage of fault location error is 0.01% for a 120 km transmission line for the simulated case.

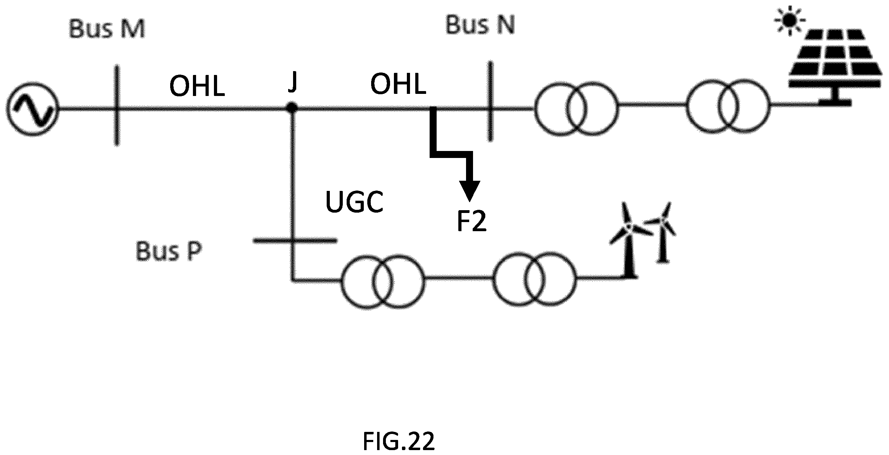

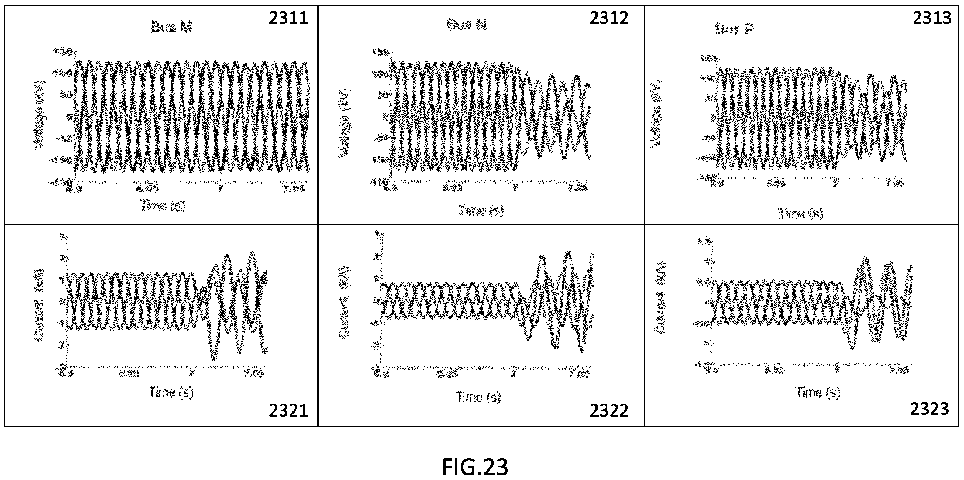

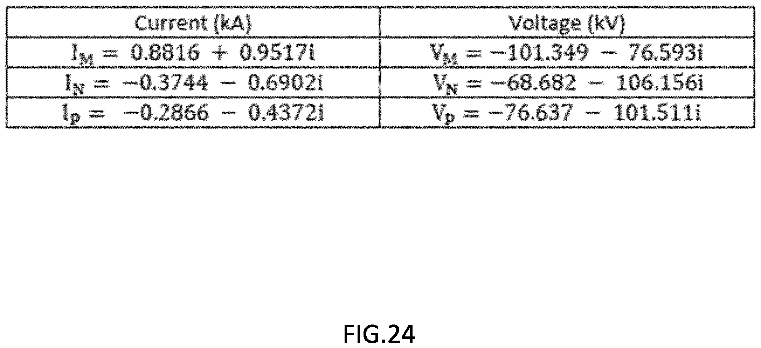

Fig. 23 and Fig. 24 show the simulation results obtained considering the network of Fig. 22 with BCG fault on NJ section at 105 km from Bus M with fault resistance of 20 Ω. According to an embodiment, the network of Fig. 22 is the network 1200 of Fig. 12. Fig. 23 illustrates graphical simulation results of a three terminal network according to an embodiment of the present disclosure. In particular, Fig. 23 shows the voltage and current phasors obtained using discrete Fourier transform. Fig. 24 illustrates a table of simulation results of a three terminal network according to an embodiment of the present disclosure.

- Step-1: Initial guess calculation 513.

Z1 is calculated using equation (7.3.3) as following:

$$Z1 = \frac{V_M^1 - V_N^1}{I_M^1 \ell_{MJ} - I_N^1 \ell_{NJ}} = \frac{(-101.349 - 76.53j) - (68.682 - 106.156j)}{(0.8816 + 0.9517j)(8)10^4 - (0.3744 - 0.6902j)(4)10^4}$$

$$= 1.5150 \times 10^{-5} + 3.2736 \times 10^{-4}j \left(\frac{\Omega}{m}\right) \quad (82)$$

Z2 is calculated using equation (7.3.4) as following:

$$Z2 = \frac{V_M^1 - V_P^1 - I_M^1 Z1 \ell_{MJ}}{(I_M^1 + I_N^1) \ell_{PJ}}$$

$$= \frac{(-101.349 - 76.53j) - (-76.637 - 101.511j) - (0.8816 + 0.9517j)(1.5150 \times 10^{-5} + 3.2736 \times 10^{-4}j)(8) \times 10^4}{(0.5072 + 0.2615j)(2)10^4}$$

$$= 3.9465 \times 10^{-5} + 78.7023 \times 10^{-5}j \left(\frac{\Omega}{m}\right) \quad (83)$$

- Step-2: Estimation of line parameters 514.

The parameters obtained from step-1 (R, L) are given as initial guess to least-squares iterative method.

$$R1_0 = 1.5150 \times 10^{-5}, X1_0 = 3.2736 \times 10^{-4}, C1_0 = 0.5C1_{act}$$

$$R2_0 = 3.9465 \times 10^{-5}, X2_0 = 8.7023 \times 10^{-5}, C2_0 = 0.5C2_{act}$$

$$v0 = \begin{bmatrix} R1_0 \\ X1_0 \\ C1_0 \\ R2_0 \\ X2_0 \\ C2_0 \end{bmatrix} = \begin{bmatrix} 1.5150 \times 10^{-5} \\ 3.2736 \times 10^{-4} \\ 7.6253 \times 10^{-9} \\ 3.9465 \times 10^{-5} \\ 8.7023 \times 10^{-5} \\ 1.2128 \times 10^{-7} \end{bmatrix} \tag{84}$$

The unknown vector is estimated using Least square method.

$$v_{est} = \begin{bmatrix} 1.8746 \times 10^{-5} \\ 3.2633 \times 10^{-4} \\ 5.0306 \times 10^{-9} \\ 1.5673 \times 10^{-5} \\ 1.0498 \times 10^{-4} \\ 8.1149 \times 10^{-8} \end{bmatrix} \tag{85}$$

The estimated parameters are obtained using eq.(33) as follows:

$$R1 = 1.8764 \times 10^{-5} \left( \frac{\Omega}{m} \right) \tag{86}$$

$$L1 = \frac{X1}{2\pi f} = \frac{3.2633 \times 10^{-4}}{2\pi \times 50} = 1.0387 \times 10^{-6} \left( \frac{H}{m} \right) \tag{87}$$

$$C1 = \frac{B1}{2\pi f} = \frac{5.0306 \times 10^{-9}}{2\pi \times 50} = 1.6013 \times 10^{-11} \left( \frac{F}{m} \right) \tag{88}$$

$$R2 = 1.5673 \times 10^{-5} \left( \frac{\Omega}{m} \right) \tag{89}$$

$$L2 = \frac{X2}{2\pi f} = \frac{1.0498 \times 10^{-4}}{2\pi \times 50} = 3.3417 \times 10^{-7} \left( \frac{H}{m} \right) \tag{90}$$

$$C2 = \frac{B2}{2\pi f} = \frac{8.1149 \times 10^{-8}}{2\pi \times 50} = 2.5830 \times 10^{-10} \left( \frac{F}{m} \right) \tag{91}$$

Percentage error of each parameter can be calculated as:

$$\%|R_{err}| = \left|\frac{R_1 - R1_{act}}{R1_{act}}\right| \times 100 = \left|\frac{1.8764 \times 10^{-5} - 1.8790 \times 10^{-5}}{1.8790 \times 10^{-5}}\right| \times 100 = 0.2355 \quad (92)$$

$$\%|L_{err}| = \left|\frac{L1 - L1_{act}}{L1_{act}}\right| \times 100 = \left|\frac{1.0387 \times 10^{-6} - 1.0387 \times 10^{-6}}{1.0387 \times 10^{-6}}\right| \times 100 = 0.0035 \quad (93)$$

$$\%|C_{err}| = \left|\frac{C1 - C1_{act}}{C1_{act}}\right| \times 100 = \left|\frac{1.6013 \times 10^{-11} - 1.6181 \times 10^{-11}}{1.6181 \times 10^{-11}}\right| \times 100 = 1.0410 \quad (94)$$

$$\%|R_{err}| = \left|\frac{R2 - R2_{act}}{R2_{act}}\right| \times 100 = \left|\frac{1.5673 \times 10^{-5} - 1.6280 \times 10^{-5}}{1.6280 \times 10^{-5}}\right| \times 100 = 3.7305 \quad (95)$$

$$\%|L_{err}| = \left|\frac{L2 - L2_{act}}{L2_{act}}\right| \times 100 = \left|\frac{3.3417 \times 10^{-7} - 3.3391 \times 10^{-7}}{3.3391 \times 10^{-7}}\right| \times 100 = 0.0785 \quad (96)$$

$$\%|C_{err}| = \left|\frac{C2 - C2_{act}}{C2_{act}}\right| \times 100 = \left|\frac{2.5830 \times 10^{-10} - 2.5737 \times 10^{-10}}{2.5737 \times 10^{-10}}\right| \times 100 = 0.3615 \quad (97)$$

According to an embodiment, an auto-reclosing protection scheme is implemented. According to an embodiment, the fault section is identified as, "Section NJ". According to an embodiment, the corresponding fault loop is executed from the faulted section information, the fault location is calculated as 105.08km from Bus M. According to an embodiment, the absolute percentage of fault location error is 0.08% for a 120 km transmission line for the simulated case.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for determining at least one network parameter of a network comprising a power line being terminated by at least three terminals, the method comprising:

   obtaining measurements of the at least three terminals, in particular the measurements measured before a fault, terminating the power line at respective ends of the power line, the power line comprising respective sections being portions of the power line starting from a location on the power line to the respective ends, wherein electrical parameters of at least one of the respective sections are different from the electrical parameters of other respective sections;
   obtaining at least one input parameter for a network model of the network based on the obtained measurements of the at least three terminals,
   wherein the at least one input parameter for the network model is an electrical parameter of the network model, in particular an impedance of one of the respective sections of the power line;

determining the at least one network parameter based on the at least one input parameter for the network model and the network model; and

providing the at least one network parameter to a device being configured to control, monitor, and/or analyse the network.

2. The method of claim 1, wherein the obtaining the at least one input parameter for the network model comprises or is determining the at least one input parameter for the network model based on the obtained measurements of the at least three terminals and a further network model,

wherein the further network model is different from the network model used to determine the at least one network parameter, and

wherein the network model comprises at least one more electrical parameter than the further network model, in particular a propagation constant of one of the respective sections of the power line or a line capacitance of one of the respective sections of the power line coupling the one of the respective sections to the electrical ground potential.

3. The method of claim 2, wherein the at least one input parameter for the network model is determined adaptive to the difference in the electrical parameters among the respective sections of the power line modelled in the further network model, and/or wherein the at least one network parameter is determined adaptive to the difference in electrical parameters among the respective sections of the power line modelled in the further network model.

4. The method of any one of claims 1 to 3, further comprising:

determining a faulted section based on the at least one input parameter for the network model; and

controlling a power device, in particular an auto recloser for the power line, based on the determined faulted section.

5. The method of claim 4, further comprising:

estimating the fault location, in particular when the power device operates in a first operation mode in response to the control, based on the determined faulted section, at least one electrical parameter of the network model, and voltage and current fault phasors, in particular measured during the fault; and

providing the at least one network parameter to the device being configured to control, monitor, and/or analyse the network.

6. A device for determining at least one network parameter of a network comprising a power line being terminated by at least three terminals, the device comprising a processor being configured to:

obtain measurements of the at least three terminals terminating the power line at respective ends of the power line, the power line comprising respective sections being portions of the power line starting from a location on the power line to the respective ends,

wherein electrical parameters of at least one of the respective sections are different from the electrical parameters of other respective sections;

obtain at least one input parameter for a network model of the network based on the obtained measurements of the at least three terminals,

wherein the at least one input parameter for the network model is an electrical parameter of the network model, in particular an impedance of one of the respective sections of the power line;

determine the at least one network parameter based on the at least one input parameter for the network model and the network model; and

provide the at least one network parameter to a device being configured to control, monitor, and/or analyse the network.

7. The device of claim 6, wherein the processor is configured to obtain the at least one input parameter for the network model by determining the at least one input parameter for the network model based on the obtained measurements of the at least three terminals and a further network model,

wherein the further network model is different from the network model used to determine the at least one network parameter, and
wherein the network model comprises at least one more electrical parameter than the further network model, in particular a propagation constant of one of the respective sections of the power line or a line capacitance of one of the respective sections of the power line coupling the one of the respective sections to the electrical ground potential.

8.  The device of claim 7, wherein the processor is configured to determine the at least one input parameter for the network model adaptive to the difference in the electrical parameters among the respective sections of the power line modelled in the further network model, and/or the processor is configured to determine the at least one network parameter adaptive to the difference in electrical parameters among the respective sections of the power line modelled in the further network model.

9.  The device of any one of claims 6 to 8, wherein the processor is further configured to:

    determine a faulted section based on the at least one input parameter for the network model; and
    control a power device, in particular an auto recloser for the power line, based on the determined faulted section.

10. The device of claim 9, wherein the processor is further configured to:

    estimate the fault location, in particular when the power device operates in a first operation mode in response to the control, based on the determined faulted section, at least one electrical parameter of the network model, and voltage and current fault phasors, in particular measured during the fault; and
    provide the at least one network parameter to the device being configured to control, monitor, and/or analyse the network.

11. A computer-readable medium, for determining at least one network parameter of a network comprising a power line being terminated by at least three terminals, carrying instructions to perform the method of any one of claims 1 to 5.

12. A system comprising a network comprising a power line being terminated by at least three terminals and a device of any of claims 6 to 10.

13. The system of claim 12, further comprising a power device, in particular an auto-recloser for the power line.

**S101** — Input
- Pre-fault voltages and currents from all the terminals (single set data)

**S101** — Algorithm
- Step-1: Calculate parameters (R,L) using approximate R-L model
- Step-2: Estimate line parameters (R,L,C) using distributed model (R L C)

**S101** — Output
- Correct Line parameters (R, L, and C)

FIG.1a)

obtaining measurements of the at least three terminals, in particular the measurements measured before a fault, terminating the power line at respective ends of the power line, the power line comprising respective sections being portions of the power line starting from a location on the power line to the respective ends,
wherein electrical parameters of at least one of the respective sections are different from the electrical parameters of other respective sections

S151

obtaining at least one input parameter for a network model of the network based on the obtained measurements of the at least three terminals, wherein the at least one input parameter for the network model is an electrical parameter of the network model, in particular an impedance of one of the respective sections of the power line

S152

determining the at least one network parameter based on the at least one input parameter for the network model and the network model

S153

providing the at least one network parameter to a device being configured to control, monitor, and/or analyse the network

S154

FIG.1b)

**FIG.2**

**FIG.3**

FIG.4

FIG.5

31

| | Source angle | Positive sequence impedance |
|---|---|---|
| Source at Bus M | 0° | 2 ∠79° |
| Source at Bus N | −30° | 12 ∠85° |

| Sequence | Series impedance (ohm/m) | Shunt admittance (mho/m) |
|---|---|---|
| Positive sequence | 1.8790e-05 + 3.2632e-04i | 5.0836e-09i |
| Zero sequence | 1.8689e-04 + 1.8273e-03i | 1.3461e-09i |

| Rating per unit | 2MW |
|---|---|
| Number of units | 100 |
| Machine rated Voltage | 0.69 kV |
| PCC HV | 33 kV |

FIG.6

FIG.7

| $R_{act}$ ($\Omega$/m) | $L_{act}$ (H/m) | $C_{act}$ (F/m) |
|---|---|---|
| $1.8790e - 05$ | $1.0387e - 06$ | $1.6181e - 11$ |

~891

| Current (kA) | Voltage (kV) |
|---|---|
| $I_M = -0.9833 + 0.0976i$ | $V_M = -126.452 + 2.0951i$ |
| $I_N = 1.4710 - 0.3723i$ | $V_N = -115.953 + 46.5111i$ |
| $I_P = -0.5039 + 0.1877i$ | $V_P = -123.217 + 24.3154i$ |

~892

FIG. 8

FIG. 9

| 220 kV, 50 Hz | Source angle | Positive sequence impedance | |
|---|---|---|---|
| Source at Bus M | 0° | 12.7 ∠85° | ~1091 |
| Source at Bus N | −32° | 15 ∠82° | |
| Source at Bus P | −25° | 4.5 ∠80° | |

| Section | $R_{act}$ (Ω /m) | $L_{act}$ (H/m) | $C_{act}$ (F/m) |
|---|---|---|---|
| MJ-80 km, NJ-40 km | 1.8790e − 05 | 1.0387e − 06 | 1.6181e − 11 |
| PJ-20 km | 1.6280e-05 | 3.3391e-07 | 2.5737e-10 |

FIG. 10

Bus M  1141  J  1142  Bus N

1111  1131  1143  1132  1112

1133

Bus P  1161  1162  1113

1100

| 220 kV, 50 Hz | Source angle | Positive sequence impedance |
|---|---|---|
| Source at Bus M | 0° | 2∠79° |
| Source at Bus N | −30° | 4 ∠85° |

~1191

~1192

| Section | $R_{act}$ (Ω /m) | $L_{act}$ (H/m) | $C_{act}$ (F/m) |
|---|---|---|---|
| MJ-80 km, NJ-40 km | 1.8790$e$ − 05 | 1.0387e − 06 | 1.6181e − 11 |
| PJ-20 km | 1.6280e-05 | 3.3391e-07 | 2.5737e-10 |

| Rating per unit | 2MW |
|---|---|
| Number of units | 100 |
| Machine rated Voltage | 0.69 kV |
| PCC HV | 33 kV |

~1193

FIG.11

| 220 kV, 50 Hz | Source angle | Positive sequence impedance | ~1291 |
|---|---|---|---|
| Source at Bus M | 0° | 2∠79° | |

| Section | $R_{act}$ (Ω/m) | $L_{act}$ (H/m) | $C_{act}$ (F/m) |
|---|---|---|---|
| MJ-80 km, NJ-40 km | $1.8790e-05$ | $1.0387e-06$ | $1.6181e-11$ |
| PJ-20 km | 1.6280e-05 | 3.3391e-07 | 2.5737e-10 |

1292

| Rating per unit | 2MW | ~1293 |
|---|---|---|
| Number of units | 100 | |
| Machine rated Voltage | 0.69 kV | |
| PCC HV | 33 kV | |

| Rating per unit | 0.3 MW | ~1294 |
|---|---|---|
| Number of units | 1000 | |
| Machine rated Voltage | 0.48 kV | |
| PCC HV | 33 kV | |

FIG.12

FIG.13

| Current (kA) | Voltage (kV) |
|---|---|
| $I_M = -0.9658 - 0.2672i$ | $V_M = -121.0122 - 37.0645i$ |
| $I_N = 1.5141 + 0.0374i$ | $V_N = -125.3986 + 8.4671i$ |
| $I_P = -0.5190 - 0.0499i$ | $V_P = -126.1661 - 12.4229i$ |

~1491

FIG.14

FIG.15

FIG.16

FIG.17

| Current (kA) | Voltage (kV) |
|---|---|
| $I_M = -2.3229 + 1.4861i$ | $V_M = -149.291 + 83.792i$ |
| $I_N = 0.9209 - 1.1208i$ | $V_N = -91.11 + 152.986i$ |
| $I_P = 1.0951 - 0.6087i$ | $V_P = -104.824 + 143.976i$ |

FIG.18

EP 4 340 151 A1

FIG.19

FIG.20

| Current (kA) | Voltage (kV) |
|---|---|
| $I_M = 1.2669 - 0.1082i$ | $V_M = 126.322 - 2.646i$ |
| $I_N = -1.6888 + 0.5460i$ | $V_N = 112.688 - 57.147i$ |
| $I_P = 0.4957 - 0.1675i$ | $V_P = 121.645 - 34.553i$ |

FIG.21

FIG.22

FIG.23

| Current (kA) | Voltage (kV) |
|---|---|
| $I_M = 0.8816 + 0.9517i$ | $V_M = -101.349 - 76.593i$ |
| $I_N = -0.3744 - 0.6902i$ | $V_N = -68.682 - 106.156i$ |
| $I_P = -0.2866 - 0.4372i$ | $V_P = -76.637 - 101.511i$ |

FIG.24

Europäisches
Patentamt

European
Patent Office

Office européen
des brevets

**EUROPEAN SEARCH REPORT**

Application Number

EP 22 20 5489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/348352 A1 (GAJARE SWAROOP [IN] ET AL) 5 November 2020 (2020-11-05) | 1-12 | INV.<br>H02J3/00 |
| Y | * paragraphs [0003], [0005], [0006], [0009], [0014], [0015], [0016], [0021], [0022], [0041], [0045] – [0053], [0059], [0104], [0112]; figures 1,2,4,5A,5B,5C *<br>----- | 13 | H02J13/00 |
| Y | US 2020/408827 A1 (NAIDU OBBALAREDDI DEMUDU [IN] ET AL) 31 December 2020 (2020-12-31) * paragraph [0002] *<br>----- | 13 | |

TECHNICAL FIELDS
SEARCHED      (IPC)

H02J

The present search report has been drawn up for all claims

| Place of search | Date of completion of the search | Examiner |
|---|---|---|
| Munich | 3 August 2023 | Ramcke, Ties |

EPO FORM 1503 03.82 (P04C01)

## ANNEX TO THE EUROPEAN SEARCH REPORT
## ON EUROPEAN PATENT APPLICATION NO.

EP 22 20 5489

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | Publication date | Patent family member(s) | | Publication date |
|---|---|---|---|---|---|
| US 2020348352 | A1 | 05-11-2020 | CN | 111542980 A | 14-08-2020 |
| | | | EP | 3732760 A1 | 04-11-2020 |
| | | | US | 2020348352 A1 | 05-11-2020 |
| | | | WO | 2019130126 A1 | 04-07-2019 |
| US 2020408827 | A1 | 31-12-2020 | CN | 111226363 A | 02-06-2020 |
| | | | EP | 3662553 A1 | 10-06-2020 |
| | | | US | 2020408827 A1 | 31-12-2020 |
| | | | WO | 2019025840 A1 | 07-02-2019 |

EPO FORM P0459

For more details about this annex : see Official Journal of the European Patent Office, No. 12/82